# EUROPÄISCHE PATENTSCHRIFT

(11) **EP 3 919 452 B1**
(45) Veröffentlichungstag und Bekanntmachung des Hinweises auf die Patenterteilung: **06.03.2024**
(21) Anmeldenummer: 21177232.2
(22) Anmeldetag: 01.06.2021
(51) Int. Cl.: C03B 23/08, C03B 23/09

(54) **VERFAHREN UND ANLAGE ZUM HERSTELLEN EINES GLASBEHÄLTNISSES**
METHOD AND SYSTEM FOR MANUFACTURING A GLASS CONTAINER
PROCÉDURE ET SYSTÈME DE FABRICATION D'UN CONTENANT EN VERRE

(30) Priorität: 04.06.2020 DE 102020114903
(43) Veröffentlichungstag der Anmeldung: 08.12.2021
(73) Patentinhaber: Gerresheimer Bünde GmbH, 32257 Bünde (DE)
(72) Erfinder: Wolfram, Acker, 32257 Bünde (DE); Vladislav, Löpp, 32257 Bünde (DE); Matthias, Hellmich, 32257 Bünde (DE); Rainer, Vahle, 32120 Hiddenhausen (DE)
(74) Vertreter: Schmid, Nils T.F.

(56) Entgegenhaltungen:
- US-A1- 2018 273 418
- US-B1- 6 310 318

## Beschreibung

Verfahren zum Herstellen eines Glasbehältnisses, wie einer Glasspritze oder einer Glasampulle. Außerdem ist gemäß der vorliegenden Erfindung eine Anlage zum Herstellen eines Glasbehältnisses, wie einer Glasspritze oder einer Glasampulle, vorgesehen.

Glasbehältnisses bzw. Glasköper für Glasspritzen oder Glasampullen unterliegen sehr geringen Fertigungstoleranzen, damit zum einen eine hohe Produktqualität sichergestellt werden kann und zum anderen die teilweise genormten Schnittstellen beispielsweise im trichterförmigen Endabschnitt eingehalten werden können. Ein grundlegender Einflussfaktor ist durch die Wandstärkenabmessung der zylindrischen Glasrohrrohlinge gegeben, die fertigungsbedingten Toleranzen unterliegen. Ein weiterer, die Qualität beziehungsweise Genauigkeit des Glasbehältnisses beeinträchtigender Faktor ist durch die fertigungsspezifischen Toleranzen beim Ablängen von Glasbehältnisrohlingen von dem Glasrohrrohling gegeben, bei dem Längentoleranzen entstehen.

Grundsätzlich besteht ein Bestreben, Glasbehältnisse in vordefinierten, konstanten Gesamtlängen herzustellen. Dieses Bestreben wird durch die oben genannten Fertigungstoleranzen beeinträchtigt. Diese führen nämlich zu unterschiedlichen Gewichtsmassen der von dem Glasrohrrohling abgelängten Glasbehältnisrohlinge. Aufgrund der unterschiedlichen Gewichtsmassen der Glasbehältnisrohlinge lassen sich die mittels Warmumformung herzustellenden Abschnitte für den trichterförmigen Endabschnitt beziehungsweise für den radial erstreckenden Abstütz- oder Flanschabsatz nicht konstant beziehungsweise nicht auf eine vordefinierte Längenabmessung herstellen. Dies führt zu erhöhtem Ausschuss wegen Qualitätsverlusten insbesondere im Bereich des trichterförmigen Endabschnitts beziehungsweise des Abstützabsatzes.

Im Stand der Technik wird dies dadurch gelöst, dass ein Massenüberschuss für jedes Glasbehältnis vorgesehen wird, der sich in einer Überschusslänge äußert. Die Überschusslänge entsteht insbesondere dadurch, dass aufgrund der einschnürenden Warmumformung im Bereich des trichterförmigen Endabschnitts und gegebenenfalls im Bereich des radial erstreckenden Abstützabsatzes ein Massenüberschuss an Glas entsteht, der sich in einem Längenüberschuss kompensiert. Längenüberschüsse reichen bis in den Millimeterbereich. Um den Längenüberschuss wieder zu kompensieren, wird dieser in einem nachgelagerten Prozessschritt mittels einer mechanischen Ablängeinrichtung abgeschnitten. Allerdings wurde herausgefunden, dass der Ablängschritt zum einen erneut fertigungsspezifischen Längentoleranzen unterliegt und zum anderen stirnseitige Oberflächenfehler und Verschmutzungen aufgrund von Glaspartikeln, die durch den Abschneidevorgang entstehen, einhergehen, welche die Weiterverarbeitung, wie zum Beispiel Sterilisation, des Glasspritzenkörpers erschweren. Ferner bewirkt das nachträgliche mechanische Ablängen einen Verschnitt, der sich negativ auf die Kosten des Herstellungsverfahrens auswirkt.

Beispielsweise offenbart WO 2005/092805 A1 eine Glasbearbeitungsmachine mit Formwerkzeugen zur Warmumformung beispielsweise eines Glasrohrrohlings. Bei WO 2005/092805 A1 wird eine möglichst genaue Ausrichtung der Lage der Formwerkzeuge angestrebt, um Fertigungstoleranzen insbesondere im einschnürenden Verformungsbereich einer Düse einer Glasspritze zu verringern. Dies wird dadurch erreicht, dass die Positionierung der umzuformenden Glasrohrrohlinge in Bezug auf die Lage der Formwerkzeuge gemessen wird und mit in einer Steuereinheit hinterlegten Soll-Werten verglichen wird, um eine höhere Qualität bei der Fertigung zu erzielen. WO 2005/092805 A1 stellt allerdings keine Maßnahme bereit, um die oben beschriebenen fertigungsspezifischen Wandstärkenabmessungstoleranzen sowie Längentoleranzen zu kompensieren, insbesondere zu reduzieren.

US 6310318B1 betrifft ein Verfahren zur Herstellung von Zylinderrohrabschnitten aus vorzugsweise aus Glas bestehenden Rohren, insbesondere für die Verwendung als Spritzenzylinder, mit einer Bevorratungsstation für die Rohre, einer Bearbeitungsstation, einer Transporteinrichtung zur Abführung der fertiggestellten Zylinderrohrabschnitte sowie einem die Zylinderrohrabschnitte vom Rohr abtrennenden, im Bereich der Bearbeitungsstation angeordneten Laserbearbeitungskopf.

Eine Aufgabe der vorliegenden Erfindung besteht darin, ein Verfahren und eine Anlage zum Herstellen eines Glasbehältnis sowie ein Glasbehältnis bereitzustellen, das/die eine höhere Qualität besitzt und/oder geringeren Fertigungstoleranzen unterliegt.

Die Aufgabe wird durch die Gegenständer der unabhängigen Ansprüche gelöst.

Gemäß einem Aspekt der vorliegenden Erfindung ist ein Verfahren zum Herstellen eines Glasbehältnisses bereitgestellt. Bei den Glasbehältnissen kann es sich beispielsweise um eine Glasspritze, eine Glasampulle, eine Glaskarpule oder ein Glasvial handeln. In der Regel sind die Glasbehältnisse rotationssymmetrisch. Gattungsgemäße Glasbehältnisse weisen in der Regel Gesamtlängserstreckungen im Bereich von 50 mm bis 90 mm und/oder Außendurchmesser im Bereich von 6,5 mm bis 10,85 mm und/oder Wandstärken bzw. Wanddicken im Bereich von 0,8 mm bis 1,3 mm auf. Die Glasbehältnisse werden aus einem Glasbehältnis-Rohling hergestellt, der hohl ausgebildet ist. Der Glasbehältnis-Rohling kann eine Rotationsachse definieren, bezüglich welcher der Glasbehältnis-Rohling rotationssymmetrisch ausgebildet ist. In diesem Fall kann auch von einem Glasrohr-Rohling gesprochen werden. Die Glasbehältnis-Rohlinge können beispielsweise fortwährend bereitgestellt werden, beispielsweise aus einem Vorratslager, in dem diese bevorratet sind und welches in unmittelbarer Nähe zu einer Glasbehältnis-Herstellungsanlage aufgestellt ist. Des Weiteren kann das Bereitstellen von Glasbehältnis-Rohlingen so eingerichtet sein, dass diese unmittelbar von einer Glasblasstation entnommen werden, insbesondere in Form eines Endlos-Glasbehältnis-Rohlings. Die herzustellenden Glasbehältnisse weisen einen formbestimmten Abgabeabschnitt und gegebenenfalls eine formbestimmte Konterauflage auf. Unter formbestimmt ist insbesondere zu verstehen, dass der Abgabeabschnitt und gegebenenfalls die Konterauflage in der Form und/oder Geometrie vorbestimmt sind, beispielsweise genormt sind und/oder nach definierten Anforderungen geformt sind. Bei dem Abgabeabschnitt kann es sich beispielsweise um einen Konusabschnitt handeln. Der Konusabschnitt kann eine kegelstumpfförmige Gestalt besitzen und/oder sich zunehmend zu einer Abgabeöffnung, welche an einem stirnseitigen Ende des Glasbehältnisses bzw. des Abgabeabschnittsausgebildet ist, hin verjüngen. Die Konterauflage kann als sich radial, das heißt quer zur Längserstreckungsrichtung des Glasbehältnisses, erstreckender Abstütz- oder Flanschabsatz insbesondere zum Abstützen bzw. Auflegen eines Fingers einer Bedienperson ausgebildet sein. Die Konterauflage ist in der Regel ebenfalls rotationssymmetrisch ausgebildet und/oder umläuft bzw. umgibt ringartig einen insbesondere zylindrischen Glasbehältnis-Grundkörper. Abgabeabschnitt und Konterauflage werden in der Regel durch Warmumformung gebildet. Beispielsweise kann vorgesehen sein, dass der Glasbehältnis-Rohling wenigstens abschnittsweise bis zu seiner Transformationstemperatur erhitzt wird und anschließend mit einem Formgebungswerkzeug formdefinierend umgeformt wird.

Gemäß dem Verfahren wird die Flächenmasse des Glasbehältnis-Rohlings mittelbar oder unmittelbar erfasst und anhand der erfassten Flächenmasse eine individuelle Gesamtlängserstreckung, insbesondere Axiallänge, eines zur Herstellung des Glasbehältnisses umzuformenden, insbesondere warmumzuformenden, Glasbehältnis-Halbzeugs ermittelt. Die Flächenmasse kann als diejenige Masse verstanden werden, die der Glasbehältnis-Rohling in Bezug auf eine infinitesimal kleine Länge in Rohling-Längsrichtung besitzt. Mit anderen Worten kann die Flächenmasse als die Masse einer Querschnittsfläche des Glasbehältnis-Rohlings verstanden werden. Die Flächenmasse hängt damit insbesondere von der Dichte von Glas sowie von der Querschnittsfläche des Glasbehältnis-Rohlings ab, welche wiederum von einer Außendimensionierung, einer Innendimensionierung und/oder einer Wandstärke des hohlen, insbesondere zylindrischen rohrähnlichen, Glasbehältnis-Rohlings abhängt. Die Flächenmasse kann direkt bzw. unmittelbar oder indirekt bzw. mittelbar erfasst werden. Beispielsweise kann die Flächenmasse gemessen werden. Es ist auch möglich, die Flächenmasse über eine Erfassung einer mit der Flächenmasse zusammenhängenden Größe, wie beispielsweise einer Innenabmessung, insbesondere eines Innendurchmessers, oder einer Außenabmessung, insbesondere eines Außendurchmessers, und/oder einer Wandstärke bzw. Wanddicke des Glasbehältnis-Rohlings und eine darauffolgende Zuordnung der erfassten, insbesondere gemessenen, Größe zur Flächenmasse erfolgen, beispielsweise durch ein Berechnungs- bzw. Skalierungsverfahren. Beispielsweise kennzeichnet der Glasbehältnis-Rohling die Rohware, die beispielsweise vorkonfektioniert und/oder in einer vorbestimmten Rohling-Länge vorliegt.

Das Glasbehältnis-Halbzeug kann als ein Intermediat oder Zwischenprodukt zwischen dem als Rohware vorliegenden Glasbehältnis-Rohling und dem herzustellenden, fertigen Glasbehältnis verstanden werden. Insbesondere kennzeichnet sich der Glasbehältnis-Halbzeug dadurch aus, dass dieser zur Herstellung des Glasbehältnisses nicht mehr abgelängt werden muss bzw. keinem Ablängprozess mehr unterworfen wird, sondern im Wesentlichen ausschließlich durch ein Umformverfahren, insbesondere ein Warmumformverfahren, hergestellt wird. Dies bedeutet, dass durchaus noch Oberflächen-Nachbearbeitungsmaßnahmen notwendig sein können. Beispielsweise kann gemäß dem Verfahren vorgesehen sein, dass anhand der erfassten Flächenmasse eine individuelle Gesamtlängserstreckung eines zur Herstellung des Glasbehältnisses im Wesentlichen ausschließlich durch Umformung, insbesondere durch ein Umformverfahren, wie ein Warmumformverfahren, weiterzubearbeitenden Glasbehältnis-Halbzeug ermittelt wird. Unter der individuellen Gesamtlängserstreckung des Glasbehältnis-Halbzeugs ist diejenige Axiallänge bzw.

Gesamtlängserstreckung des Glasbehältnis-Halbzeugs zu verstehen, die das Glasbehältnis-Halbzeug aufweisen muss, um möglichst fertigungstoleranzfrei und möglichst genau die gewünschte und/oder vorbestimmte Glasbehältnis-Länge zu erreichen, wobei vor allem auch der Glasbehältnis-Rohling-Ausschuss reduziert, insbesondere vermieden, wird. Durch die individuelle Bestimmung einer optimalen Glasbehältnis-Halbzeug-Gesamtlängserstreckung kann auf den bislang im Stand der Technik vorgesehen Massenüberschuss bzw. Längenüberschuss verzichtet werden. Vor allem kann dadurch der bislang notwendige, nachgelagerte Abläng-Prozessschritt vermieden werden. Dadurch können deutlich höher qualitative Glasbehältnisse hergestellt werden. Ferner ist die Herstellzeit vermindert und/oder es kann die Taktung beim Herstellen von Glasbehältnissen erhöht werden. Die Erfinder der vorliegenden Erfindung haben zum einen herausgefunden, dass die Glasbehältnis-Rohlinge in ihren Abmessungen und/oder ihrer Qualität variieren können, insbesondere Fertigungstoleranzen unterliegen. Des Weiteren haben die Erfinder der vorliegenden Erfindung herausgefunden, dass über eine Bestimmung der individuellen Flächenmasse der Glasbehältnis-Rohlinge und über die anschließende Ermittlung einer individuellen Gesamtlängserstreckung der zu den Glasbehältnissen weiterzuverarbeitenden Glasbehältnis-Halbzeuge die Varianzen bzw. Fertigungstoleranzen ausgeglichen werden können. Ferner ist es mittels des erfindungsgemäßen Verfahrens möglich, Glasbehältnisse konstanter Glasbehältnis-Länge herzustellen, wobei unter konstant insbesondere zu verstehen ist, dass die gewünschte und/oder vorbestimmte Glasbehältnis-Länge mit sehr geringer Fertigungstoleranzen und hoher Fertigungsgenauigkeit produziert sind.

Gemäß einer beispielhaften Weiterbildung des erfindungsgemäßen Verfahrens wird das Glasbehältnis-Halbzeug entsprechend der ermittelten Gesamtlängserstreckung von dem Glasbehältnis-Rohling abgelängt. Mit anderen Worten wird ein Glasbehältnis-Halbzeug mit der individuellen Axiallänge von dem Glasbehältnis-Rohling abgetrennt, welches dann zur Bildung, insbesondere Formung, des Glasbehältnisses ausschließlich umzuformen ist, insbesondere durch ein Umformverfahren, wie ein Warmumformverfahren, weiterzubearbeiten ist, nämlich bei dem ein Endabschnitt des Glasbehältnis-Halbzeugs zur Bildung des formbestimmten Abgabeabschnitts und gegebenenfalls ein gegenüberliegender Endabschnitt zur Bildung der formbestimmten Konterauflage umzuformen sind. Dadurch, dass ein individuelles Glasbehältnis-Halbzeug unter Berücksichtigung der Flächenmasse und der damit verbundenen geometrischen Parameter des Glasbehältnis-Rohlings erzeugt wurde und insbesondere in Kenntnis der formbestimmten Endabschnitte, nämlich des Abgabeabschnitts und gegebenenfalls der Konterauflage, kann ein Glasbehältnis mit deutlich geringerer Fertigungstoleranz hergestellt werden.

In einer weiteren beispielhaften Ausführung der vorliegenden Erfindung wird anhand der erfassten Flächenmasse des Glasbehältnis-Rohlings eine individuelle Längserstreckung eines insbesondere vorlaufenden Endabschnitts ermittelt, aus dem der formbestimmte Abgabeabschnitt zu formen ist bzw. geformt wird. Gegebenenfalls kann auch eine individuelle Längserstreckung eines insbesondere nachlaufenden, zweiten, Endabschnitts ermittelt werden, aus dem die Konterauflage zu formen ist, bzw. geformt wird. Die Begriffe nachlaufend bzw. vorlaufend können dabei in Bezug auf eine Glasblasformrichtung und/oder in Bezug auf eine Bearbeitungsreihenfolge zu verstehen sein, wobei in der Regel zuerst der Abgabeabschnitt und gegebenenfalls anschließend die Konterauflage geformt werden.

Gemäß einer beispielhaften Weiterbildung wird anhand der ermittelten Längserstreckung/en von Abgabeabschnitt und gegebenenfalls Konterauflage die Gesamtlängserstreckung des Glasbehältnis-Halbzeugs ermittelt. Insbesondere ist zur Herstellung des Glasbehältnisses aus dem Glasbehältnis-Halbzeug nur noch der Abgabeabschnitt und gegebenenfalls die Konterauflage zu bilden, was durch Umformen, insbesondere Warmumformen, realisiert wird. Mit anderen Worten besteht eine Idee der vorliegenden Erfindung gemäß der beispielhaften Ausführung darin, die für die Formgebungsschritte zum Umformen des Abgabeabschnitts und gegebenenfalls der Konterauflage, welche in ihrer Abmessung und/oder Form vorbestimmt sind, benötigte Formmasse an Glas, insbesondere Schmelzmasse, zu bestimmen, um Ausschuss zu vermeiden und die Produktqualität zu erhöhen. Durch die individuelle Glasbehältnis-Halbzeug-Länge kann trotz der geometrischen Variationen und/oder Fertigungstoleranzen vom Glasbehältnis-Rohling ein Glasbehältnis konstanter bzw. vorbestimmter Länge mit konstantem, formbestimmtem Abgabeabschnitt und gegebenenfalls konstanter, formbestimmter Konterauflage hergestellt werden.

In einer weiteren beispielhaften Ausführung des erfindungsgemäßen Verfahrens wird das abgetrennte Glasbehältnis-Halbzeug zumindest abschnittsweise erwärmt, um den Abgabeabschnitt und gegebenenfalls die Konterauflage zu formen. Beispielsweise erfolgt das Erwärmen mittels wenigstens eines Brenners. Insbesondere kann das Glasbehältnis-Halbzeug abschnittsweise im Bereich der Transformationstemperatur erwärmt werden. Insbesondere wird das Glasbehältnis-Halbzeug im Bereich des insbesondere vorlaufenden Endabschnitts für den Abgabeabschnitt und gegebenenfalls im Bereich des insbesondere nachlaufenden Endabschnitts für die Konterauflage erwärmt. Insbesondere wird die Wärme lokal über die ermittelte individuelle Längserstreckung des insbesondere vorlaufenden Endabschnitts für den Abgabeabschnitt und gegebenenfalls des insbesondere nachlaufenden Endabschnitts für die Konterauflage zugeführt.

Gemäß einer beispielhaften Weiterbildung des erfindungsgemäßen Verfahrens wird anhand einer glasspezifischen Materialkonstante ein Verformungsverhalten, insbesondere Schmelzverfahren, des Glasbehältnis-Halbzeugs beim Erwärmen und/oder beim Formen des Abgabeabschnitts und gegebenenfalls der Konterauflage antizipiert. Ferner wird die Gesamtlängserstreckung unter Berücksichtigung bzw. anhand des antizipierten Verformungsverhaltens ermittelt, insbesondere berechnet. Beispielsweise kann anhand des antizipierten Verformungsverhaltens von Abgabeabschnitt und gegebenenfalls Konterauflage die individuelle Längserstreckung des einen Endabschnitts für den Abgabeabschnitt und gegebenenfalls des anderen Abschnitts für die Konterauflage ermittelt, insbesondere berechnet, werden, und anhand den ermittelten Längserstreckungen für Abgabeabschnitt und gegebenenfalls Konterauflage die Glasbehältnis-Halbzeug-Gesamtlängserstreckung ermittelt werden.

Gemäß einem weiteren Aspekt der vorliegenden Erfindung, der mit den vorhergehenden Aspekten und beispielhaften Ausführungen kombinierbar ist, ist ein Verfahren zum Herstellen eines Glasbehältnisses bereitgestellt. Bei den Glasbehältnissen kann es sich beispielsweise um eine Glasspritze, eine Glasampulle, eine Glaskarpule oder ein Glasvial handeln. In der Regel sind die Glasbehältnisse rotationssymmetrisch. Gattungsgemäße Glasbehältnisse weisen in der Regel Gesamtlängserstreckungen im Bereich von 50 mm bis 90 mm und/oder Außendurchmesser im Bereich von 6,5 mm bis 10,85 mm und/oder Wandstärken bzw. Wanddicken im Bereich von 0,8 mm bis 1,3 mm auf. Die Glasbehältnisse werden aus einem Glasbehältnis-Rohling hergestellt, der hohl ausgebildet ist. Der Glasbehältnis-Rohling kann eine Rotationsachse definieren, bezüglich welcher der Glasbehältnis-Rohling rotationssymmetrisch ausgebildet ist. In diesem Fall kann auch von einem Glasrohr-Rohling gesprochen werden. Die Glasbehältnis-Rohlinge können beispielsweise fortwährend bereitgestellt werden, beispielsweise aus einem Vorratslager, in dem diese bevorratet sind und welches in unmittelbarer Nähe zu einer Glasbehältnis-Herstellungsanlage aufgestellt ist. Des Weiteren kann das Bereitstellen von Glasbehältnis-Rohlingen so eingerichtet sein, dass diese unmittelbar von einer Glasblasstation entnommen werden, insbesondere in Form eines Endlos-Glasbehältnis-Rohlings. Die herzustellenden Glasbehältnisse weisen einen formbestimmten Abgabeabschnitt und gegebenenfalls eine formbestimmte Konterauflage auf. Unter formbestimmt ist insbesondere zu verstehen, dass der Abgabeabschnitt und gegebenenfalls die Konterauflage in der Form und/oder Geometrie vorbestimmt sind, beispielsweise genormt sind und/oder nach definierten Anforderungen geformt sind. Bei dem Abgabeabschnitt kann es sich beispielsweise um einen Konusabschnitt handeln. Der Konusabschnitt kann eine kegelstumpfförmige Gestalt besitzen und/oder sich zunehmend zu einer Abgabeöffnung, welche an einem stirnseitigen Ende des Glasbehältnisses bzw. des Abgabeabschnittsausgebildet ist, hin verjüngen. Die Konterauflage kann als sich radial, das heißt quer zur Längserstreckungsrichtung des Glasbehältnisses, erstreckender Abstütz- oder Flanschabsatz insbesondere zum Abstützen bzw. Auflegen eines Fingers einer Bedienperson ausgebildet sein. Die Konterauflage ist in der Regel ebenfalls rotationssymmetrisch ausgebildet und/oder umläuft bzw. umgibt ringartig einen insbesondere zylindrischen Glasbehältnis-Grundkörper. Abgabeabschnitt und Konterauflage werden in der Regel durch Warmumformung gebildet. Beispielsweise kann vorgesehen sein, dass der Glasbehältnis-Rohling wenigstens abschnittsweise bis zu seiner Transformationstemperatur erhitzt wird und anschließend mit einem Formgebungswerkzeug formdefinierend umgeformt wird.

Gemäß dem Verfahren wird der Glasbehältnis-Rohling zumindest abschnittsweise erwärmt, um den Abgabeabschnitt und gegebenenfalls die Konterauflage zu formen. Beispielsweise erfolgt das Erwärmen mittels wenigstens eines Brenners. Insbesondere kann der Glasbehältnis-Rohling abschnittsweise im Bereich der Transformationstemperatur erwärmt werden. Insbesondere wird der Glasbehältnis-Rohling im Bereich eines insbesondere vorlaufenden Endabschnitts für den Abgabeabschnitt und gegebenenfalls im Bereich eines insbesondere nachlaufenden Endabschnitts für die Konterauflage erwärmt.

Ferner wird vor dem Formen des Abgabeabschnitts und gegebenenfalls der Konterauflage die Flächenmasse des Glasbehältnis-Rohlings mittelbar oder unmittelbar erfasst. Die Flächenmasse kann als diejenige Maße verstanden werden, die der Glasbehältnis-Rohling in Bezug auf eine infinitesimal kleine Länge in Rohling-Längsrichtung besitzt. Mit anderen Worten kann die Flächenmasse als die Masse einer Querschnittsfläche des Glasbehältnis-Rohlings verstanden werden. Die Flächenmasse hängt damit insbesondere von der Dichte von Glas sowie von der Querschnittsfläche des Glasbehältnis-Rohlings ab, welche wiederum von einer Außendimensionierung, einer Innendimensionierung und/oder einer Wandstärke des hohlen, insbesondere zylindrischen rohrähnlichen, Glasbehältnis-Rohlings abhängt. Die Flächenmasse kann direkt bzw. unmittelbar oder indirekt bzw. mittelbar erfasst werden. Beispielsweise kann die Flächenmasse gemessen werden. Es ist auch möglich, die Flächenmasse über eine Erfassung einer mit der Flächenmasse zusammenhängenden Größe, wie beispielsweise einer Innenabmessung, insbesondere eines Innendurchmessers, oder einer Außenabmessung, insbesondere eines Außendurchmessers, und/oder einer Wandstärke bzw. Wanddicke des Glasbehältnis-Rohlings und eine darauffolgende Zuordnung der erfassten, insbesondere gemessenen, Größe zur Flächenmasse erfolgen, beispielsweise durch ein Berechnungs- bzw. Skalierungsverfahren. Beispielsweise kennzeichnet der Glasbehältnis-Rohling die Rohware, die beispielsweise vorkonfektioniert und/oder in einer vorbestimmten Rohling-Länge vorliegt.

Bei dem Verfahren wird anhand der erfassten Flächenmasse des Glasbehältnis-Rohlings eine individuelle Längserstreckung eines insbesondere vorlaufenden Endabschnitts ermittelt, aus dem der formbestimmte Abgabeabschnitt zu formen ist bzw. geformt wird. Gegebenenfalls kann auch eine individuelle Längserstreckung eines insbesondere nachlaufenden, zweiten, Endabschnitts ermittelt werden, aus dem die Konterauflage zu formen ist, bzw. geformt wird. Die Begriffe nachlaufend bzw. vorlaufend können dabei in Bezug auf eine Glasblasformrichtung und/oder in Bezug auf eine Bearbeitungsreihenfolge zu verstehen sein, wobei in der Regel zuerst der Abgabeabschnitt und gegebenenfalls anschließend die Konterauflage geformt werden.

Gemäß dem zweiten erfindungsgemäßen Aspekt wird anhand der ermittelten Längserstreckung/en, nämlich der individuellen Längserstreckung für den Abgabeabschnitt und gegebenenfalls für die Konterauflage, eine axiale Deformationsstelle am Glasbehältnis-Rohling bestimmt, um den Abgabeabschnitt und gegebenenfalls die Konterauflage zu bilden. Axial ist dabei in Bezug auf eine Glasbehältnis-Rohling-Längsrichtung zu verstehen. In Kenntnis der individuellen Längserstreckung des Abgabeabschnitts und gegebenenfalls der Konterauflage kann in Abhängigkeit des individuellen Glasbehältnis-Rohlings, insbesondere dessen Geometrie, Abmessung und/oder Fertigungstoleranzen, diejenige Axial-Deformationsstelle am Glasbehältnis-Rohling ermittelt werden, an welcher eine Deformation des Glasbehältnis-Rohlings zur Bildung, insbesondere Formung, von Abgabeabschnitt und gegebenenfalls Konterauflage zu erfolgen hat, ohne dass es notwendig ist, einen Masse- und/oder Längenüberschuss vorzusehen, um gegebenenfalls vorhandene Fertigungstoleranzen zu kompensieren. Durch die individuelle Bestimmung der Deformationsstelle in Abhängigkeit der geometrischen Gegebenheiten am individuellen Glasverhältnis-Rohling kann möglichst die optimale Axial-Deformationsstelle ermittelt und eingenommen bzw. angewendet werden.

In der Regel erfolgt das Formen, insbesondere Warmumformen, des Abgabeabschnitts und der Konterauflage durch wenigstens eine Formrolle, insbesondere durch ein Paar einander zugeordneter und sich gegenüberliegender Formrollen, die zum Formgeben in einen Formabrollkontakt mit dem Glasbehältnis-Rohling bzw. dem Glasbehältnis-Halbzeug bringbar ist/sind. Die Formrollen besitzen in der Regel eine im Wesentlichen zylinderförmige Struktur oder sind kegelförmig geformt. Gemäß einer beispielhaften Weiterbildung wird die axiale Deformationsstelle am Glasbehältnis-Rohling für den Abgabeabschnitt und gegebenenfalls die Konterauflage anhand der ermittelten Längserstreckung/en des Endabschnitts für den Abgabeabschnitt und gegebenenfalls des Endabschnitts für die Konterauflage sowie anhand einer vorab festgelegten oder ermittelten Axiallänge des Glasbehältnisses bestimmt. In Kenntnis der Flächenmasse des individuellen Glasbehältnis-Rohlings und der daraus abgeleiteten individuellen Längserstreckung der Endabschnitte für Abgabeabschnitt und gegebenenfalls Konterauflage kann zuverlässig gewährleistet werden, dass die Formgebungs- bzw. Schmelzmasse an Glas für den Abgabeabschnitt und gegebenenfalls die Konterauflage konstant gehalten werden kann und/oder dass Abgabeabschnitt und gegebenenfalls Konterauflage entsprechend einer Form-Vorgabe hergestellt werden können, die beispielsweise gemäß einer Normung vorliegt, in der sowohl die Glasmasse für den Abgabeabschnitt und die Konterauflage als auch deren Abmessungen, insbesondere Außendurchmesser, Innendurchmesser und/oder Wandstärke, vorgegeben sein können.

Gemäß einer beispielhaften Ausführung der vorliegenden Erfindung wird die axiale Deformationsstelle derart festgelegt, dass ein von einer axialen Deformationsstelle begrenzter axialer Endabschnitt des Glasbehältnis-Rohlings zum Bilden des Abgabeabschnitts und gegebenenfalls der Konterauflage eine vorbestimmte Masse besitzt, insbesondere eine vorbestimmte Formgebungs- und/oder Schmelzmasse. Dadurch kann gewährleistet werden, dass zuverlässig der in seiner Form und/oder Abmessung vorbestimmte Abgabeabschnitte und gegebenenfalls die in ihrer Form und/oder Abmessung vorbestimmte Konterauflage die vorbestimmte Masse an Glas aufweisen. Dadurch ist die Produktqualität deutlich erhöht. Ferner kann Ausschuss vermieden werden. Unnötige Massen- bzw. Längenüberschüsse können verhindert werden, wodurch auch insbesondere der dann notwendige Abtrennschritt zum Kompensieren des Masse- bzw. Längenüberschusses entfällt, welcher zum einen einen zusätzlichen Prozessschritt und damit Kosten bedeutet sowie zum anderen erneut Fertigungstoleranzen unterliegt und Ausschuss generiert.

In einer weiteren beispielhaften Ausführung des erfindungsgemäßen Verfahrens wird entsprechend einer vorab festgelegten oder ermittelten, insbesondere gemäß dem ersten Aspekt des erfindungsgemäßen Verfahrens ermittelten, Gesamtlängserstreckung ein zur Bildung des Glasbehältnisses umzuformendes, insbesondere ausschließlich umzuformendes und/oder ausschließlich durch ein Umformverfahren, wie ein Warmumformverfahren, zur Herstellung des Glasbehältnisses weiterzubearbeitendes, Glasbehältnis-Halbzeug von dem Glasbehältnis-Rohling abgelängt. Der wesentliche Unterschied zwischen dem Glasbehältnis-Rohling und dem Glasbehältnis-Halbzeug besteht darin, dass das Glasbehältnis-Halbzeug im Wesentlichen ausschließlich noch durch Umformung, insbesondere Warmumformung, weiterzuverarbeiten ist, um das Glasbehältnis herzustellen. Selbstverständlich können allerdings noch Oberflächenbearbeitungsmaßnahmen notwendig sein. Es ist jedoch nicht mehr nötig, das Glasbehältnis-Halbzeug abzulängen und/oder Abschnitte davon zu machen, um Massen- bzw. Längenüberschüsse zu kompensieren. Das Glasbehältnis-Halbzeug wird gemäß einer entsprechenden Axiallänge erzeugt, die so gewählt ist, insbesondere optimiert ist, dass bei drauffolgender Bildung des Abgabeabschnitts und gegebenenfalls der Konterauflage das Glasbehältnis fertiggestellt ist, wobei eine hohe Fertigungsgenauigkeit erreicht ist.

Gemäß einem weiteren beispielhaften Ausführung des erfindungsgemäßen Verfahrens wird eine Planheit, auch Planarität bzw. Planizität genannt, die ein Maß für eine Oberflächengüte sein kann, einer axialen End-Stirnfläche des Glasbehältnis-Rohlings oder des abgelängten Glasbehältnis-Halbzeugs ermittelt, insbesondere gemessen. Diesbezüglich kann ein Planheitssensor eingesetzt werden. Der Planheitssensor kann beispielsweise einen Messbereich von 6,4 mm, eine Auflösung von 2 µm, eine Wiederholgenauigkeit von ± 0,2 µm und/oder eine Abtastrate von 0,65 kHz besitzen, um zuverlässige und reproduzierbare Ergebnisse zu erzielen. Die Erfinder der vorliegenden Erfindung haben herausgefunden, dass sich die Planheit der End-Stirnfläche der weiterzubearbeitenden, insbesondere durch Umformen, wie Warmumformen, insbesondere in einem Formwerkzeug, Glasbehältnis-Rohlinge oder Glasbehältnis-Halbzeuge auf die Fertigungsgenauigkeit insofern auswirkt, als die Planheit der End-Stirnfläche sich auf die Positionierung insbesondere in Bezug auf die Axialrichtung bei einem anschließenden Formgebungsschritt des Bildens des Abgabeabschnitts und gegebenenfalls der Konterauflage auswirkt. Durch das Messen der Planheit der End-Stirnfläche können Positionierungstoleranzen bzw. Einlegetoleranzen in einem Formwerkzeug reduziert, insbesondere vermieden, werden.

Gemäß einer weiteren beispielhaften Ausführung des erfindungsgemäßen Verfahrens wird der Glasbehältnis-Rohling oder das abgelängte Glasbehältnis-Halbzeug anhand der axialen Deformationsstelle und gegebenenfalls der Planheit der axialen End-Stirnfläche bezüglich eines Formwerkzeugs, wie wenigstens einer Formrolle, insbesondere eines Formrollen-Paars, zum Bilden des Abgabeabschnitts und gegebenenfalls der Konterauflage positioniert. Die Bildung des Abgabeabschnitts und der Konterauflage erfolgt in der Regel durch Umformen, insbesondere Warmumformen. Durch die zusätzlichen Informationen in Bezug auf die axiale Deformationsstelle und die gegebenenfalls Planheit kann der umzuformende Glasbehältnis-Rohling bzw. das umzuformende Glasbehältnis-Halbzeug möglichst optimal in das Formwerkzeug eingelegt werden, so dass die formbestimmten Bereiche für Abgabeabschnitt und gegebenenfalls Konterauflage möglichst exakt hergestellt werden können, um möglichst geringe Fertigungstoleranzen zu erzielen.

Gemäß einer beispielhaften Weiterbildung des erfindungsgemäßen Verfahrens wird anhand einer glasspezifischen Materialkonstante ein Verformungsverhalten, insbesondere Schmelzverfahren, des Glasbehältnis-Halbzeugs oder des Glasbehältnis-Rohlings beim Erwärmen und/oder beim Formen des Abgabeabschnitts und gegebenenfalls der Konterauflage antizipiert. Ferner wird/werden die Längserstreckung des zu formenden Abgabeabschnitts und gegebenenfalls der zu formenden Konterauflage unter Berücksichtigung bzw. anhand des antizipierten Verformungsverhaltens ermittelt, insbesondere berechnet. Beispielsweise kann anhand des antizipierten Verformungsverhaltens von Abgabeabschnitt und gegebenenfalls Konterauflage die individuelle Längserstreckung des einen Endabschnitts für den Abgabeabschnitt und gegebenenfalls des anderen Abschnitts für die Konterauflage ermittelt, insbesondere berechnet, werden, und anhand den ermittelten Längserstreckungen für Abgabeabschnitt und gegebenenfalls Konterauflage die Glasbehältnis-Halbzeug-Gesamtlängserstreckung ermittelt werden. In Kenntnis der glasspezifischen Materialkonstante für die Verformung bzw. Schmelzung von Glas sowie der vorbestimmten Abmessungen und/oder Massen der fertiggestellten Abgabeabschnitte und gegebenenfalls Konterauflage am fertigen Glasbehältnis kann die Axiallänge der jeweiligen Endabschnitte am Glasbehältnis-Rohling bzw. Glasbehältnis-Halbzeug, aus denen jeweils der Abgabeabschnitt bzw. die Konterauflage durch Umformen herzustellen sind, und damit verbunden die axiale Deformationsstelle, insbesondere an welcher das Formwerkzeug eingreifen muss, ermittelt bzw. vorhergesagt werden.

Gemäß einer weiteren beispielhaften Ausführung des erfindungsgemäßen Verfahrens, die für alle bisherigen Aspekte und beispielhaften Ausführungen relevant sein kann, wird ein Außendurchmesser, ein Innendurchmesser und/oder eine Wandstärke des Glasbehältnis-Rohlings erfasst, insbesondere gemessen. Beispielsweise kann der Wanddickensensor ein optischer Sensor sein, welcher die Intensität von Reflektionen messen kann. Ferner kann die Flächenmasse des Glasbehältnis-Rohlings anhand des gemessenen Außendurchmessers, des gemessenen Innendurchmessers und/oder der Wandstärke ermittelt, insbesondere berechnet, werden. Es sei klar, dass die Dichte von Glas bekannt ist.

Ein Glasbehältnis umfasst einen zylindrischen Grundkörper, einen an den Grundkörper anschließenden sich verjüngenden Abgabeabschnitt, insbesondere Konusabschnitt oder Kegelstumpfabschnitt, der ein frontseitiges offenes Ende des Glasbehältnisses bildet bzw. aufweist. Ferner umfasst das Glasbehältnis ein an den Grundkörper anschließendes, dem Abgabeabschnitt gegenüberliegendes, gegebenenfalls als Konterauflage geformtes, rückseitiges Ende. Beispielsweise ist die Konterauflage als Ringflansch ausgebildet, der von dem zylindrischen Grundkörper in Radialrichtung nach außen vorsteht und den zylindrischen Grundkörper umläuft. Beispielsweise weist die Konterauflage eine die Stirnseite des Glasbehältnisses bildende ebene Fingerauflagefläche auf, welche im Wesentlichen senkrecht zur axialen Längserstreckungsrichtung des Glasbehältnisses orientiert ist.

Das frontseitige und das rückseitige Ende sind thermisch abgelängt. Das thermische Ablängen kann beispielsweise entsprechend der DIN Norm 2310-6 durch Gas, Gasentladung oder durch Strahlaufbringung erfolgen. Beispielsweise beruht das bevorzugte Trennverfahren darauf, dass lokal in dem zu trennenden Bereich sehr hohe Materialspannungen, insbesondere mechanische Spannungen, erzeugt werden, die zu einem Trennen, insbesondere Springen, Reißen oder Platzen, des Glasmaterials führen. Beispielsweise kann ein Abschreckverfahren angewendet werden, indem durch Ritzen oder ohne Ritzen, lokale Erwärmung und schlagartiges Abschrecken die Materialspannungen erzeugt werden. Gegebenenfalls kann der Trennvorgang durch lokales Nacherhitzen unterstützt werden. Gemäß einer weiteren beispielhaften Ausführung kann ein Laserverfahren eingesetzt werden. Das Vorbereiten des Trennvorgangs, insbesondere das Anritzen, kann dabei durch einen Pulslaser, insbesondere einen hochgepulsten Laser, erfolgen, um das Glas lokal zu schwächen, insbesondere zu perforieren. Anschließend kann in einem weiteren Laser-Erhitzungsschritt, beispielsweise mit einem CO₂-Laser, die geschwächte Stelle lokal erhitzt werden, um das Trennen durchzuführen. Das Laserverfahren zeichnet sich vor allem durch eine erhöhte Qualität der Trennebene aus.

Im Stand der Technik musste bislang immer wenigstens ein Ende mechanisch abgelängt werden, beispielsweise mittels eines Ritzmessers, um den Masse- bzw. Längenüberschuss zu kompensieren, der eingestellt wurde, um die Fertigungstoleranzen auszugleichen. Ein Vorteil des thermischen Ablängens besteht darin, dass aufwendige Nachbehandlungsschritte der Schnittkanten bzw. Schnittflächen zum Polieren, Glätten und/oder Ausbessern von Oberflächenrissen vermieden werden können.

In einer beispielhaften Ausführung eines Glasbehältnisses unterliegt die Gesamtlängserstreckung, insbesondere dessen Axiallänge, einer Toleranz von ± 0,4 mm, insbesondere ± 0,3 mm, ± 0,2 mm oder ± 0,1 mm. Die Toleranz ist beispielsweise in Bezug auf eine Vorgabe, wie eine Normung, zu verstehen. Stand der Technik-gemäße Glasbehältnisse unterliegen deutlich größeren Fertigungsungenauigkeiten bzw. Toleranzen.

Gemäß einem weiteren Aspekt der vorliegenden Erfindung, der mit den vorhergehenden Aspekten und beispielhaften Ausführungen kombinierbar ist, ist eine Anlage zum Herstellen eines Glasbehältnisses, wie eine Glasspritze oder eine Glasampulle, eines Glasvials oder einer Glaskarpule, bereitgestellt. In der Regel sind die Glasbehältnisse rotationssymmetrisch. Gattungsgemäße Glasbehältnisse weisen in der Regel Gesamtlängserstreckungen im Bereich von 50 mm bis 90 mm und/oder Außendurchmesser im Bereich von 6,5 mm bis 10,85 mm und/oder Wandstärken bzw. Wanddicken im Bereich von 0,8 mm bis 1,3 mm auf. Die Glasbehältnisse werden aus einem Glasbehältnis-Rohling hergestellt, der hohl ausgebildet ist. Der Glasbehältnis-Rohling kann eine Rotationsachse definieren, bezüglich welcher der Glasbehältnis-Rohling rotationssymmetrisch ausgebildet ist. In diesem Fall kann auch von einem Glasrohr-Rohling gesprochen werden. Die Glasbehältnis-Rohlinge können beispielsweise fortwährend bereitgestellt werden, beispielsweise aus einem Vorratslager, in dem diese bevorratet sind und welches in unmittelbarer Nähe zu einer Glasbehältnis-Herstellungsanlage aufgestellt ist. Des Weiteren kann das Bereitstellen von Glasbehältnis-Rohlingen so eingerichtet sein, dass diese unmittelbar von einer Glasblasstation entnommen werden, insbesondere in Form eines Endlos-Glasbehältnis-Rohlings. Die herzustellenden Glasbehältnisse weisen einen formbestimmten Abgabeabschnitt und gegebenenfalls eine formbestimmte Konterauflage auf. Unter formbestimmt ist insbesondere zu verstehen, dass der Abgabeabschnitt und gegebenenfalls die Konterauflage in der Form und/oder Geometrie vorbestimmt sind, beispielsweise genormt sind und/oder nach definierten Anforderungen geformt sind. Bei dem Abgabeabschnitt kann es sich beispielsweise um einen Konusabschnitt handeln. Der Konusabschnitt kann eine kegelstumpfförmige Gestalt besitzen und/oder sich zunehmend zu einer Abgabeöffnung, welche an einem stirnseitigen Ende des Glasbehältnisses bzw. des Abgabeabschnittsausgebildet ist, hin verjüngen. Die Konterauflage kann als sich radial, das heißt quer zur Längserstreckungsrichtung des Glasbehältnisses, erstreckender Abstütz- oder Flanschabsatz insbesondere zum Abstützen bzw. Auflegen eines Fingers einer Bedienperson ausgebildet sein. Die Konterauflage ist in der Regel ebenfalls rotationssymmetrisch ausgebildet und/oder umläuft bzw. umgibt ringartig einen insbesondere zylindrischen Glasbehältnis-Grundkörper. Abgabeabschnitt und Konterauflage werden in der Regel durch Warmumformung gebildet. Beispielsweise kann vorgesehen sein, dass der Glasbehältnis-Rohling wenigstens abschnittsweise bis zu seiner Transformationstemperatur erhitzt wird und anschließend mit einem Formgebungswerkzeug formdefinierend umgeformt wird. Beispielsweise kann die Anlage dazu eingerichtet sein, Glasbehältnisse aus Borosilikatglas herzustellen. Die Anlage kann beispielweise derart ausgebildet und eingerichtet sein, dass sie Glasbehältnisse mit einer Fertigungstoleranz von ± 0,4 mm, insbesondere ± 0,3 mm, ± 0,2 mm oder ± 0, 1 mm, herstellt.

Die erfindungsgemäße Anlage umfasst Sensorik zum mittelbaren oder unmittelbaren Erfassen der Flächenmasse des Glasbehältnis-Rohlings und eine Prozessoreinheit, die dazu ausgelegt ist, anhand der erfassten Flächenmasse eine individuelle Gesamtlängserstreckung eines zur Bildung des Glasbehältnisses umzuformenden Glasbehältnis-Halbzeugs zu ermitteln. Das Glasbehältnis-Halbzeug kann beispielsweise als dasjenige Zwischenstadium zwischen dem Glasbehältnis-Rohling und dem fertiggestellten Glasbehältnis verstanden werden, welches von dem Glasbehältnis-Rohling abgelängt ist und/oder im Wesentlichen ausschließlich durch ein Umformverfahren, insbesondere Warmumformverfahren, zu dem Glasverhältnis weiterzubearbeiten ist, insbesondere durch Formgebung zur Bildung des Abgabeabschnitts und gegebenenfalls der Konterauflage.

Gemäß einer beispielhaften Ausführung der erfindungsgemäßen Glasbehältnis-Herstellungsanlage umfasst die Anlage ferner ein Ablängwerkzeug zum Ablängen des Glasbehältnis-Halbzeugs entsprechend der ermittelten Gesamtlängserstreckung von den Glasbehältnis-Rohlingen. Dadurch ist ein individuelles Glasbehältnis-Halbzeug hergestellt, welches die Fertigungsungenauigkeit und/oder Toleranzen am Glasbehältnis-Rohling kompensiert, so dass im Nachfolgenden das Glasbehältnis im Wesentlichen ausschließlich durch Umformung zu generieren ist, ohne dass weitere Abtrennschritte notwendig sind, beispielsweise um eine Masse- bzw. Längenüberschuss zu kompensieren, der vorgesehen wurde, um die vorhandenen Ungenauigkeiten am Glasbehältnis-Rohling auszugleichen.

Gemäß einer beispielhaften Weiterbildung ist die Sensorik dem Ablängwerkzeug vorgelagert. Gemäß einer weiteren beispielhaften Ausführung ist die Sensorik der Ablängeinrichtung oder Ablängstation, welche das Ablängwerkzeug aufweist, zugeordnet bzw. darin integriert. Die Ablängeinrichtung kann ferner ein Futter zum rotierenden Lagern des Glasbehältnis-Halbzeugs und gegebenenfalls weitere Lager, insbesondere Luftlager, für das Glasbehältnis-Halbzeug aufweisen.

Gemäß einem weiteren Aspekt der vorliegenden Erfindung, der mit den vorhergehenden Aspekten und beispielhaften Ausführungen kombinierbar ist, ist eine Anlage zum Herstellen eines Glasbehältnisses, wie eine Glasspritze, eine Glasampulle, eine Glaskarpule oder eines Glasvials aus einem Glasbehältnis-Rohling bereitgestellt.

Die erfindungsgemäße Anlage umfasst eine Wärmequelle, wie einen Brenner, zum zumindest abschnittsweisen Erwärmen des Glasbehältnis-Rohlings. Die Wärmequelle kann derart eingerichtet sein, dass sie im Wesentlichen ausschließlich, das heißt zu einem erheblichen Anteil, lokal Wärme auf einen vorbestimmten Bereich, insbesondere Axialabschnitt des Glasbehältnis-Rohlings applizieren kann.

Des Weiteren umfasst die Anlage ein Formwerkzeug, das dazu ausgebildet ist, den erwärmten Glasbehältnis-Rohling zur Bildung des Abgabeabschnitts und gegebenenfalls der Konterauflage zu deformieren. Beispielsweise weist das Formwerkzeug wenigstens eine Formgebungsrolle, insbesondere ein Paar einander zugeordneter und/oder gegenüberliegender Formgebungsrollen, auf. Die Formgebungsrolle kann beispielsweise zylindrisch oder auch kegelstumpfförmig ausgebildet sein. Zum Deformieren des Abgabeabschnitts und gegebenenfalls der Konterauflage kann das Formwerkzeug in einem Abrolldeformationskontakt mit dem erwärmten Glasbehältnis-Rohlingabschnitt gelangen.

Ferner umfasst die erfindungsgemäße Anlage Sensorik zum mittelbaren oder unmittelbaren Erfassen der Flächenmasse des Glasbehältnis-Rohlings, wobei die Sensorik dem Formwerkzeug vorgelagert ist. Mit anderen Worten wird die Flächenmasse des Glasbehältnis-Rohlings vor der Deformation zur Bildung des Abgabeabschnitts und gegebenenfalls der Konterauflage erfasst.

Gemäß dem weiteren erfindungsgemäßen Aspekt umfasst die Anlage außerdem eine Prozessoreinheit, die dazu ausgelegt ist, eine individuelle Längserstreckung eines insbesondere vorlaufenden Endabschnitts, aus dem der Abgabeabschnitt zu formen ist, und gegebenenfalls eines insbesondere nachlaufenden Endabschnitts, aus dem die Konterauflage zu formen ist, zu ermitteln. Des Weiteren ist die Prozessoreinheit dazu ausgelegt, anhand der ermittelten Längserstreckung/en eine axiale Deformationsstelle am Glasbehältnis-Rohling für das Formwerkzeug zu bestimmen, um den Abgabeabschnitt und gegebenenfalls die Konterauflage zu bilden. Axial ist dabei in Bezug auf eine Glasbehältnis-Rohling-Längsrichtung zu verstehen. In Kenntnis der individuellen Längserstreckung des Abgabeabschnitts und gegebenenfalls der Konterauflage kann in Abhängigkeit des individuellen Glasbehältnis-Rohlings, insbesondere dessen Geometrie, Abmessung und/oder Fertigungstoleranzen, diejenige Axial-Deformationsstelle am Glasbehältnis-Rohling ermittelt werden, an welcher eine Deformation des Glasbehältnis-Rohlings zur Bildung, insbesondere Formung, von Abgabeabschnitt und gegebenenfalls Konterauflage zu erfolgen hat, ohne dass es notwendig ist, einen Masse- und/oder Längenüberschuss vorzusehen, um gegebenenfalls vorhandene Fertigungstoleranzen zu kompensieren. Durch die individuelle Bestimmung der Deformationsstelle in Abhängigkeit der geometrischen Gegebenheiten am individuellen Glasverhältnis-Rohling kann möglichst die optimale Axial-Deformationsstelle ermittelt und eingenommen bzw. angewendet werden.

Gemäß einer beispielhaften Ausführung der erfindungsgemäßen Anlage umfasst die Sensorik zum Erfassen der Flächenmasse eine optische Sensoreinrichtung insbesondere zum Messen eines Außendurchmessers, eines Innendurchmessers und/oder einer Wandstärke des Glasbehältnis-Rohlings. Beispielsweise kann der Wanddickensensor ein optischer Sensor sein, welcher die Intensität von Reflektionen messen kann. Ferner kann die Flächenmasse des Glasbehältnis-Rohlings anhand des gemessenen Außendurchmessers, des gemessenen Innendurchmessers und/oder der Wandstärke ermittelt, insbesondere berechnet, werden. Es sei klar, dass die Dichte von Glas bekannt ist. Alternativ oder zusätzlich kann die optische Sensoreinrichtung zum Messen der Planheit einer axialen End-Stirnfläche des Glasbehältnis-Rohlings oder des abgelängten Glasbehältnis-Halbzeugs eingerichtet sein.

In einer weiteren beispielhaften Ausführung der erfindungsgemäßen Anlage ist die Anlage dazu eingerichtet, das erfindungsgemäße Herstellungsverfahren gemäß einem der zuvor beschriebenen Aspekte bzw. beispielhaften Ausführungen auszuführen, insbesondere um ein Glasbehältnis gemäß einem der zuvor beschriebenen Aspekte bzw. beispielhaften Ausführungen herzustellen.

Zusammenfassend ist es durch die erfindungsgemäßen Aspekte möglich, Glasbehältnisse mit erhöhter Qualität und mit erhöhter Fertigungsgenauigkeit herzustellen. Die Erfinder der vorliegenden Erfindung haben herausgefunden, dass die zum Herstellen von Glasbehältnissen verwendeten Glasbehältnis-Rohlinge, insbesondere Glasrohr-Rohlinge, welche rotationssymmetrisch ausgebildet sind, Fertigungsungenauigkeiten bzw. -toleranzen unterliegen. Zum einen resultieren beim Ablängen von Glasbehältnis-Halbzeugen von den Glasbehältnis-Rohlingen, welche Glasbehältnis-Halbzeuge dann zur Bildung der Glasbehältnisse umzuformen sind, Längentoleranzen sowie Planheitstoleranzen an der Schnittfläche bzw. Schnittkante. Des Weiteren resultieren Längentoleranzen bei der Formgebung, die insbesondere daraus resultieren, dass die verwendeten Glasbehältnis-Rohlinge bzw. Glasbehältnis-Halbzeuge unterschiedliche Wanddicken besitzen, was sich in einer variierenden umzuformenden Formgebungs- bzw. Schmelzmasse äußert, wodurch unterschiedliche Längen für Abgabeabschnitt und Konterauflage resultieren. Die Erfinder der vorliegenden Erfindung haben sich der Problematik von variierenden Wandstärken der Glasbehältnis-Rohlinge dadurch gestellt, dass sie Rahmenbedingungen erkannt haben, die für die herzustellenden Glasbehältnisse einzuhalten sind, nämlich eine vorbestimmte bzw. konstante Längenabmessung sowie konstante bzw. vorbestimmte Längenabmessungen und Massen für den Abgabeabschnitt und die Konterauflage sowie auch eine konstante Wandstärke im Bereich der Konterauflage und des Abgabeabschnitts. Beispielsweise existieren hier Normen, entsprechend der Abgabeabschnitt und ggf. Konterauflage zu formen sind. Es wurde überraschenderweise herausgefunden, dass über eine Variation der Gesamtmasse der individuellen Glasbehältnisse, die auf einer Wandstärkenvarianz im zylindrischen Grundkörperabschnitt zwischen dem Abgabeabschnitt und dem ggf. als Konterauflage geformten gegenüberliegenden Endabschnitt des Glasbehältnisses resultiert, was zu einer unterschiedlichen, individuellen Masse des zylindrischen Grundkörpers führt, den bestehenden Fertigungstoleranzen entgegengewirkt werden kann, wobei die Rahmenbedingungen eingehalten werden. Erfindungsgemäß wird dies zum einen durch die Erzeugung von individuellen Glasbehältnis-Halbzeugen geschafft, welche eine individuelle Axialabmessung besitzen, die anhand der jeweiligen Flächenmasse des einzelnen Glasbehältnis-Rohlings erzeugt wird. Die Wandstärkenvarianz fließt unmittelbar in die Flächenmasse ein. Gemäß einem weiteren Aspekt der vorliegenden Erfindung, wurde erkannt, dass über die individuelle Zustellung der Deformationswerkzeuge zur Bildung des Abgabeabschnitts und ggf. der Konterauflage und damit über die individuelle Einstellung der axialen Deformationsstelle für Abgabeabschnitt und ggf. Konterauflage die Fertigungsgenauigkeit weiter erhöht werden kann, nämlich insbesondere dadurch, dass die Planheitstoleranz ausgeglichen werden kann, welche beim Abtrennen der Glasbehältnis-Rohlinge bzw. Glasbehältnis-Halbzeuge resultiert.

Bevorzugte Ausführungen sind in den Unteransprüchen angegeben.

Im Folgenden werden weitere Eigenschaften, Merkmale und Vorteile der Erfindung mittels Beschreibung bevorzugter Ausführungen der Erfindung anhand der beiliegenden beispielhaften Zeichnungen deutlich, in denen zeigen:
- Fig. 1: eine schematische Darstellung einer Anlage zum Herstellen von Glasbehältnissen;
- Fig. 2: eine schematische perspektivische Ansicht einer beispielhaften Ausführung einer Ablängeinrichtung einer erfindungsgemäßen Glasbehältnis-Herstellungsanlage;
- Fig. 3: eine schematische Darstellung der Fertigungsstadien eines Glasbehältnisses; und
- Fig. 4: eine schematische Darstellung zur Entstehung von Masse- bzw. Längenüberschüssen an Stand der Technik-gemäßen Glasbehältnissen.

In der folgenden Beschreibung beispielhafter Ausführungen der Erfindung ist ein Glasbehältnis im Allgemeinen mit der Bezugsziffer 4 versehen. Für die Beschreibung der beispielhaften Ausführungen kann beispielsweise davon ausgegangen werden, dass das Glasbehältnis 4 aus Borosilikatglas hergestellt wird. Gattungsgemäße Glasbehältnisse 4 werden vor allem im medizinischen bzw. pharmazeutischen Gebrauch eingesetzt.

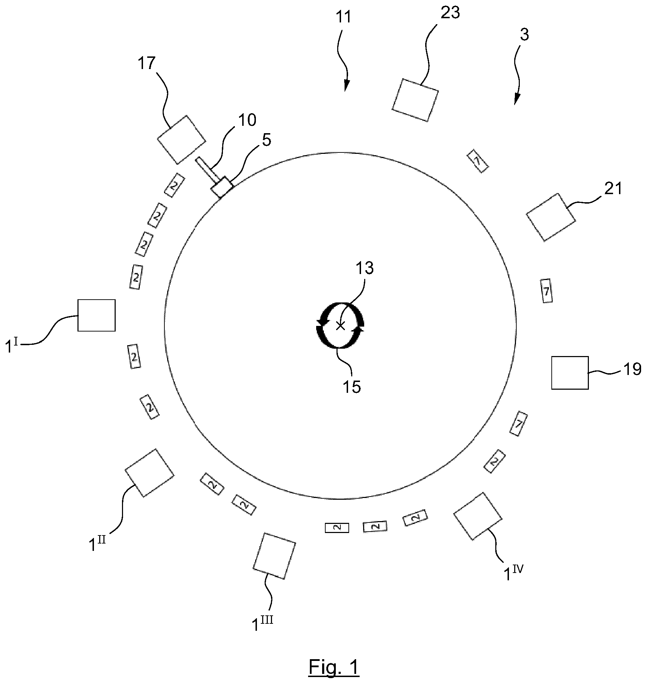

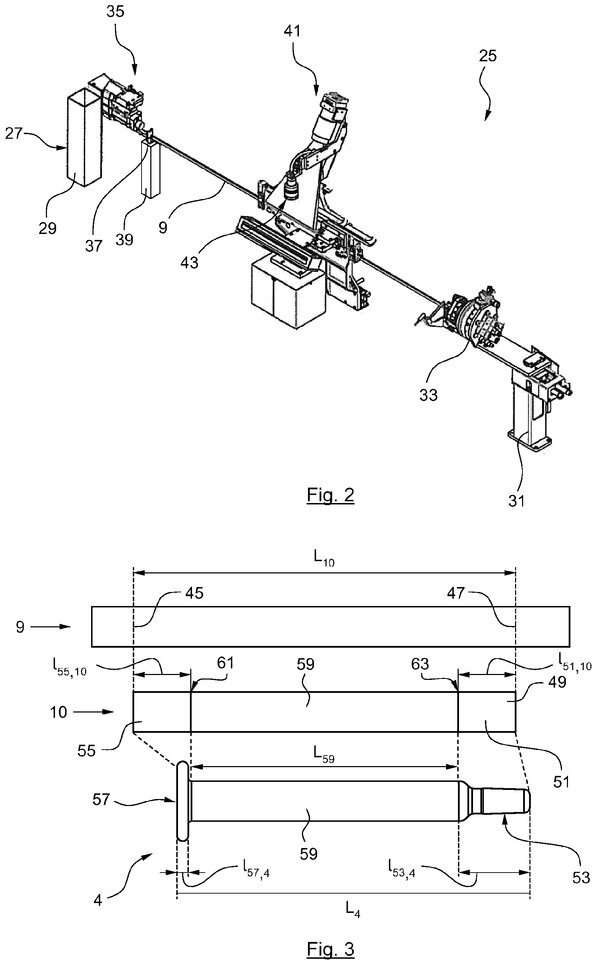

Figur 1 zeigt eine schematische Darstellung einer Anlage 3 zur Herstellung eines Glasbehältnisses 4, in der vier Formgebungsvorrichtungen 1^{I}, 1^{II}, 1^{III}, 1^{IV} schematisch abgebildet sind. In Figur 1 ist schematisch eine Aufnahme 5 zum drehbaren Halten eines Glasbehältnis-Rohlings 9 oder eines Glasbehältnis-Halbzeugs 10 dargestellt. Der Glasbehältnis-Rohling 9 kann beispielsweise als Endlos-Rohling, insbesondere als Endlos-Glasrohr, vorliegen oder in gewisser Weise auf eine vorbestimmte Axiallänge vorkonfektioniert sein. Ein Glasbehältnis-Halbzeug 10 ist im Sinne der vorliegenden Erfindung ein von einem Glasbehältnis-Rohling 9 abgetrennter bzw. abgelängter Abschnitt zu verstehen, der dadurch auszeichnet, dass dieser im Wesentlichen ausschließlich durch Umformen, insbesondere Warmumformen, weiter zu verarbeiten ist, um das Glasbehältnis 4 herzustellen. Für den Fall, dass in der Anlage 3 ein Glasbehältnis-Halbzeug 10 eingesetzt ist, kann der Anlage 3 eine in Figur 1 nicht abgebildete Ablängeinrichtung 25 (Figur 2), wie ein sogenannter Röhrenschneider, vorgeschaltet sein, die aus einem Glasbehältnis-Rohling 9 gemäß einem der erfindungsgemäßen Aspekte ein individuelles Glasbehältnis-Halbzeug 10 einer individuellen Gesamtlängserstreckung, insbesondere Axiallänge, herstellt.

Die Anlage 3 umfasst ein Karussell 11, an dem die Aufnahme 5 angebracht ist. Das Karussell 11 ist um eine Karussellachse 13 drehbar, wodurch die Aufnahme 10 zusammen mit dem Glasbehältnis-Halbzeug 10 den vier dargestellten Formgebungsvorrichtungen 1^{I}, 1^{II}, 1^{III}, 1^{IV} zugeführt werden kann. Dabei wird der Glasbehältnis-Halbzeug in Fertigungsumfangsrichtung 15 nacheinander den einzelnen Formgebungsvorrichtungen 1^{I}, 1^{II}, 1^{III}, 1^{IV} zugeführt. Vor der ersten Formgebungsvorrichtung 1^{I} sowie zwischen den darauf folgenden Formgebungsvorrichtungen 1^{II}, 1^{III} und hinter der letzten Formgebungsvorrichtung 1^{IV} sind jeweils Brenner 2 zum Erwärmen des Glasintermediates 10 angeordnet.

In Fertigungsumfangsrichtung 15 fertigungsrichtungsaufwärts der ersten Formgebungsvorrichtung 11 ist eine erste Prüfstation 17 vorgesehen, um die Position und den Planschlag des Glasbehältnis-Halbzeugs 10 in der Aufnahme 5 zu vermessen und kontrollieren zu können.

In Fertigungsumfangsrichtung 15 fertigungsrichtungsabwärts der letzten Formgebungsvorrichtung 1^{IV} und des letzten Brenners 2 ist eine erste Kühlvorrichtung 7 zum Abkühlen des Glaskörpers nach erfolgter Formgebung vorgesehen.

In Fertigungsumfangsrichtung 15 fertigungsrichtungsabwärts der letzten Formgebungsvorrichtung 1^{IV}, und der ersten Kühlvorrichtung 7, ist eine zweite Prüfstation 110 zum Prüfen der Geometrie des Glasbehältnisses 4 vorgesehen. In Fertigungsumfangsrichtung 15 fertigungsrichtungsabwärts der zweiten Prüfstation 110 ist eine zweite Kühlvorrichtung 7 und darauffolgend eine dritte Prüfstation 41 zum Detektieren von Kratzern und/oder Sprüngen im Glasbehältnis 4 vorgesehen. In Fertigungsumfangsrichtung 15 fertigungsrichtungsabwärts der dritten Prüfstation 41 ist eine dritte Kühlvorrichtung 7 vorgesehen. In Fertigungsumfangsrichtung 15 fertigungsrichtungsabwärts der dritten Kühlvorrichtung 7 ist eine Übergabevorrichtung 43 zum Übergeben des Glasbehältnisses 4 zur weiteren Bearbeitung vorgesehen. Die Übergabevorrichtung kann Mittel zum Auffangen von aus der Aufnahme 5 ausgeworfen Glasbehältnissen 4 und/oder zum Transportieren der Glasbehältnisse 4 zu einer weiteren Bearbeitungsstation (nicht dargestellt), wie beispielsweise einer Flanschformstation, aufweisen.

In Fig. 2 ist eine beispielhafte Ausführung einer Ablängeinrichtung 25 zum Ablängen von Glasbehältnis-Halbzeugen 10 einer vorbestimmten Axiallänge von einem Glasbehältnis-Rohling 9 in abstrahierter Form und perspektivischer Ansicht dargestellt. Die Ablängeinrichtung 25 ist derart gestaltet, dass der Glasbehältnis-Rohling 9 im Wesentlichen horizontal liegt, das heißt, dass dessen Rotationsachse im Wesentlichen in Horizontalrichtung orientiert ist. Grundsätzlich umfasst die Ablängeinrichtung 25 ein Gestell 27, welches gemäß der beispielhaften Ausführung in Fig. 2 zwei Stützsäulen 29, 31 besitzt. Das Gestell 27 trägt die weiteren Komponenten der Ablängeinrichtung 25. Dazu gehört unter anderem ein Futter 33 zum rotierenden Lagern des Glasrohrrohlings 9. Bei dem Futter 33 kann es sich beispielsweise um ein Drei-Backen-Spannfutter handeln. Beispielsweise besitzt das Futter 33 eine Spanneinrichtung, wie Spannbacken, zum wenigstens teilweise umfänglichen Umgreifen des Glasbehältnis-Rohlings 9 und zum Fixieren des Glasbehältnis-Rohlings 9 innerhalb des Futters 33. Das Futter kann eine nicht dargestellte Antriebseinrichtung besitzen, mittels der der Glasbehältnis-Rohling 9 insbesondere kontinuierlich rotiert werden kann, um seine Rotationsachse, die einer Mittelachse entsprechen kann.

Zur weiteren Lagerung des langgezogenen Glasbehältnis-Rohlings ist zwischen einem dem Futter 33 gegenüberliegenden Ablängwerkzeug 35 und dem Spannfutter 33 wenigstens eine Lagerung 37, wie beispielsweise eine Luftlagerung, vorgesehen, welche beispielsweise auf einer Stütze 39 angeordnet ist. Mittels des Luftlagers ist es möglich, den Glasbehältnis-Rohling kontaktlos zu lagern und in Bezug auf seine Rotationsrichtung in Position zu halten, damit der Ablängvorgang mittels des Ablängwerkzeugs 35 zuverlässig erfolgen kann. Das Ablängwerkzeug kann beispielsweise ein CO₂-Laser sein.

Des Weiteren umfasst die Ablängeinrichtung 25 Sensorik 41 zum mittelbaren oder unmittelbaren Erfassen der Flächenmasse des Glasbehältnis-Rohlings 9. Beispielsweise kann die Sensorik 41 einen optischen Wanddickensensor 43 aufweisen sowie einen Planheitssensor zum Messen der Planheit einer axialen End-Stirnfläche des Glasbehältnis-Rohlings oder des abgelängten Glasbehältnis-Halbzeugs 10. Der Wanddickensensor 43 ist beispielweise dazu eingerichtet, einen Innendurchmesser, einen Außendurchmesser und/oder eine Wandstärke des Glasbehältnis-Rohlings 9 an verschiedenen Positionen, insbesondere Axialstellen, entlang des Glasbehältnis-Rohlings zu erfassen, insbesondere während dieses kontinuierlich rotiert und ggf. axial translatorisch gefördert, insbesondere bewegt, wird.

In Bezug auf die Anlage 3 gemäß Fig. 1 kann die Ablängeinrichtung 25 in fertigungstechnischer Hinsicht der Anlage 3 vorgeschaltet sein. Beispielsweise werden die Glasbehältnis-Rohlinge 9 in der Ablängeinrichtung 25 entsprechend der mittels eines erfindungsgemäßen Verfahrens erfassten Gesamtlängserstreckung des zur Bildung des Glasbehältnisses 4 umzuformenden Glasbehältnis-Halbzeugs 10 abgelängt. Im Anschluss werden die Glasbehältnis-Halbzeuge 10 der Anlage 3 zugeführt. Somit können sich die erfindungsgemäßen Vorteile der hohen Produktqualität, der geringen Fertigungsungenauigkeiten bzw. Toleranzen und der kostengünstigeren Herstellung etablieren.

In Fig. 3 sind schematisch die einzelnen Fertigungsstadien bei der Herstellung von Glasbehältnissen 4 gezeigt: Ausgehend von einem Glasbehältnis-Rohling 9 wird ein Glasbehältnis-Halbzeug 10 entsprechend einer individuellen, ermittelten Gesamtlängserstreckung L₁₀ von dem Glasbehältnis-Rohling 9 abgelängt. In Fig. 3 sind zwei axiale Schnittstellen 45, 47 durch eine gestrichelte Linie abgebildet, gemäß welcher der Glasbehältnis-Rohling 9 abgelängt wird, um das Glasbehältnis-Halbzeug 10 zu erzeugen. Es ist auch möglich, dass lediglich eine Abtrennlinie 45, 47 bzw. ein Ablängvorgang notwendig ist, um das Glasbehältnis-Halbzeug 10 herzustellen. Dies kann dadurch erreicht werden, dass der Glasbehältnis-Rohling 9 vor dem Ablängen derart positioniert wird, dass ein vorderes Ende 49 des Glasbehältnis-Rohlings das vordere Ende 49 des Glasbehältnis-Halbzeugs bildet.

Gemäß der vorliegenden Erfindung ist das Glasbehältnis-Halbzeug 10 zur Bildung des Glasbehältnisses 4 im Wesentlichen ausschließlich durch Umformung, insbesondere Warmumformung zu generieren. Zum Herstellen des Glasbehältnisses 4 aus dem Glasbehältnis-Halbzeug 10 werden die individuellen eines vorlaufenden Endabschnitts 51, aus dem der Abgabeabschnitt 53 durch Umformen herzustellen ist, und eines nachlaufenden Endabschnitts 55, aus dem die Konterauflage 57 durch Umformen gebildet. Durch die gestrichelten Verbindungslinien zwischen Glasbehältnis-Halbzeug 10 und Glasbehältnis 4 wird angedeutet, welcher Axialabschnitt des Glasbehältnis-Halbzeugs in welchem Axialabschnitt des Glasbehältnisses 4 resultiert. Es ist zu erkennen, dass ein im Wesentlichen zylindrischer Grundkörper 59 zwischen Glasbehältnis-Halbzeug und Glasbehältnis im Wesentlichen unverändert bleibt, das heißt dieselbe Axiallänge L₅₉ besitzt. Gemäß einem weiteren Aspekt der vorliegenden Erfindung wird anhand der erfassten Flächenmasse eine individuelle Längserstreckung des vorlaufenden und des nachlaufenden Endabschnitts 51, 55 ermittelt, aus denen dann Abgabeabschnitt 53 bzw. Konterauflage 57 zu formen sind, wie es in Fig. 3 schematisch angedeutet ist. Die individuellen Längserstreckungen des vorlaufenden Endabschnitts 51, des nachlaufenden Endabschnitts 55, bzw. des Abgabeabschnitts 53 und der Konterauflage 57 sind durch die Bezugszeichen l_{55,10}, l_{51,10}, l_{57,4} und l_{53,4} gekennzeichnet.

Anhand der ermittelten Längserstreckungen l_{55,10} und l_{51,10} kann eine axiale Deformationsstelle am Glasbehältnis-Rohling 9, oder wie es schematisch in Fig. 3 dargestellt ist, am Glasbehältnis-Halbzeug 10 bestimmt werden, um den Abgabeabschnitt 53 und die Konterauflage 57 zu bilden. Die axialen Deformationsstellen 61, 63 sind diejenigen Axialstellen am Glasbehältnis-Halbzeug, an denen die Formwerkzeuge zum Umformen des Glasbehältnis-Halbzeugs zur Bildung des fertigen Glasbehältnisses 4 mit dem Abgabeabschnitt 53 und der Konterauflage 57 anzusetzen sind. Durch die individuell definierten axialen Deformationsstellen 61, 63 für Abgabeabschnitt 53 und Konterauflage 57 sowie deren Axiallänge l_{55,10} und l_{51,10} kann sichergestellt werden, dass die insbesondere exakt benötigte Formgebungsmasse bzw.

Schmelzmasse zur Bildung des formbestimmten Abgabeabschnitts 53 und der formbestimmten Konterauflage 57 vorhanden ist. Dadurch können Überschüsse vermieden werden. Die Fertigungstoleranzen bezüglich des Glasbehältnisses 4 sind im Vergleich zum Stand der Technik deutlich verringert und liegen bei etwa ± 0,4 mm, oder insbesondere bei ± 0,3 mm, ± 0,2 mm oder ± 0,1 mm.

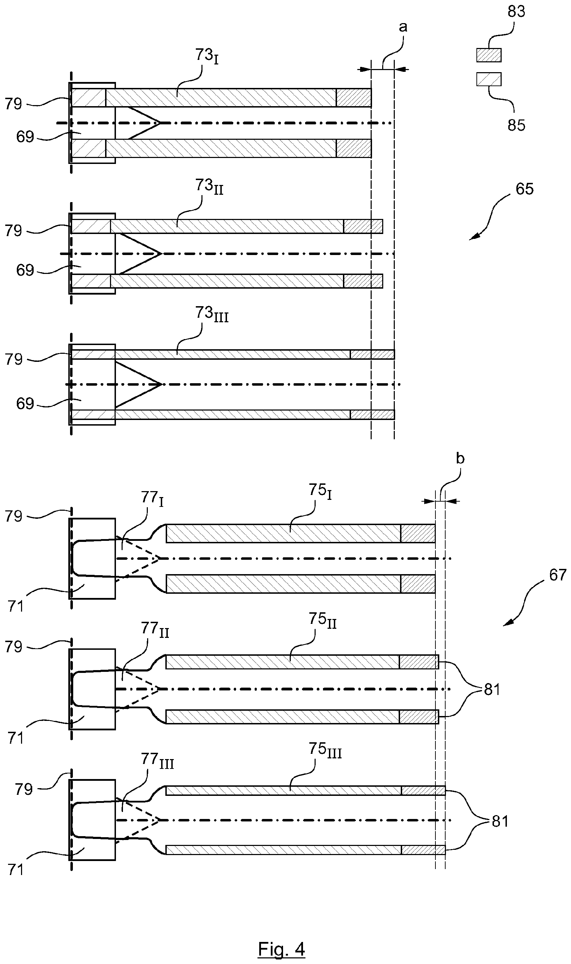

In Fig. 4 ist eine schematische Darstellung eines Fertigungsprozesses gemäß Stand der Technik zur Herstellung von Glasbehältnissen gezeigt, wobei der Fokus in der Darstellung darauf liegt, die Fertigungstoleranzen und Fertigungsungenauigkeit entstehen. In der oberen Hälfte von Fig. 4 ist die Formgebung 65 des konusförmigen Abgabeabschnitts angedeutet und in der unteren Hälfte von Fig. 4 die Formgebung der rückseitigen Konterauflage. Pro Formgebungsstation 65, 67 ist zu erkennen, dass drei Teilabbildungen zu sehen sind, die jeweils ein in einem Futter 69 bzw. 71 eingespanntes Glasbehältnis-Halbzeug oder Glasbehältnis-Rohling 73 bzw. 75 eingespannt sind. Auf die einzelnen drei Teilbilder wird jeweils durch eine tiefgestellte Ziffer Bezug genommen, wobei I jeweils für die obere Variante steht, bei der der Glasbehältnis-Rohling 73_{I} mit einer gegenüber der Norm deutlichen erhöhten Wandstärke angeliefert wird, die mittlere Variante II für einen Glasbehältnis-Rohling 73_{II} steht, der entsprechend einer Norm, das heißt mit keiner und/oder im Wesentlichen zu vernachlässigender Fertigungstoleranz, bereitgestellt wird, und die jeweils untere Variante III ein Glasbehältnis-Rohling 73_{III} darstellt, die mit einer im Vergleich zur Norm deutlich reduzierten Wandstärke angeliefert wird. Mit der Bezugsziffer 75 ist der Glasbehältnis-Rohling jeweils gekennzeichnet, welcher bereits einen geformten Abgabeabschnitt 77_{I,II,III} besitzt. Die jeweilige Referenz zur Bestimmung der Längentoleranzen bzw. Längenungenauigkeiten an den Glasbehältnis-Rohlingen 73, 75 ist jeweils durch einen Axialanschlag des Glasbehältnis-Rohlings 73, 75 im Futter 69 angegeben, was durch das Bezugszeichen 79 gekennzeichnet ist. Wie in Fig. 4 zu sehen ist, weisen die bereitgestellten Glasbehältnis-Rohlinge 73 eine Längentoleranz a, insbesondere eine Gesamtlängentoleranz, auf. Im Fertigungsprozess wird üblicherweise erst der Abgabeabschnitt 77 und dann die Konterauflage geformt. In Fig. 4, oben, ist schematisch angedeutet, welches Volumen, insbesondere Massen, jeweils an den Glasbehältnis-Rohlingen 73_{I-II}, bereitgestellt werden müssen, um anschließend Abgabeabschnitt 77_{I-III} und Konterauflage zu formen. Dabei kennzeichnen das Bezugszeichen 83 das Konterauflagevolumen und das Bezugszeichen 85 Abgabeabschnittvolumen. Es ist zu erkennen, dass in Abhängigkeit der Wandstärke der Glasbehältnis-Rohlinge 73_{I-III} die notwendige Axiallänge variiert. Um die Gesamtlängentoleranz a auszugleichen und zu vermeiden, dass Glasbehältnisse 4 außerhalb der zulässigen Toleranz hergestellt werden, wird eine zulässige Toleranz b veranschlagt, wie die Glasbehältnis-Rohlinge 73_{I-III} voneinander abweichen dürfen, so dass noch Glasbehältnisse 4 innerhalb der Fertigungstoleranz hergestellt werden können. Es ist zu erkennen, dass bei der Herstellung eines Glasbehältnisses 4 gemäß Norm, Fig. 4 unten, Variante II, ein Längenüberschuss 81 vorgesehen wird, der anschließend in einem zusätzlichen Arbeitsschritt abgetrennt werden muss. Es sei klar, dass der Längenüberschuss 81 auch bei der minimalen Wandungsstärke, Fig. 4, unten, Variante III, vorhanden ist. Dieser zusätzliche Arbeitsschritt verschlechtert die Qualität des Glasbehältnisses 4 und erfordert einen zusätzlichen Schritt und damit Kosten.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: Formgebungsvorrichtung (1^{I}, 1^{II}, 1^{III}, 1^{IV}, 1^{V})
- 2: Brenner
- 3: Anlage
- 4: Glasbehältnis
- 5: Aufnahme
- 7: Kühlvorrichtung
- 9: Glasbehältnis-Rohling
- 10: Glasbehältnis-Halbzeug
- 11: Karussell
- 13: Karussellachse
- 15: Fertigungsumfangsrichtung
- 17: erste Prüfstation
- 19: zweite Prüfstation
- 21: dritte Prüfstation
- 23: Übergabevorrichtung
- 25: Ablängeinrichtung
- 27: Gestell
- 29, 31: Säule
- 33: Futter
- 35: Ablängwerkzeug
- 37: Lagerung
- 39: Lagerungssäule
- 41: Sensorik
- 43: Wanddickensensor
- 45, 47: Schnittlinie
- 49: Ende
- 51, 55: Endabschnitt
- 53: Abgabeabschnitt
- 57: Konterauflage
- 59: Grundkörper
- 61, 63: axiale Deformationsstelle
- 65, 67: Formgebung
- 69, 71: Futter
- 73: Glasbehältnis-Rohling Variante I, II, III
- 75: Glasbehältnis-Rohling mit geformtem Abgabeabschnitt Variante I, II, III
- 77: Abgabeabschnitt Variante I, II, III
- 79: Futteranschlag
- 81: Längenüberschuss
- 83: Konterauflagevolumen
- 85: Abgabeabschnittvolumen

- Lᵢ: Länge der jeweiligen Komponente i (Glasbehältnis, Grundkörper, Glasbehältnis-Halbzeug bzw. Glasbehältnis-Rohling)
- l_{x,i}: Länge des jeweiligen Abschnitts x der Komponente i (Glasbehältnis, Glasbehältnis-Halbzeug bzw. Glasbehältnis-Rohling)
- a: Gesamtlängentoleranz
- b: Toleranz

## Patentansprüche

1. Verfahren zum Herstellen eines Glasbehältnisses (4), wie einer Glasspritze oder einer Glasampulle, mit einem formbestimmten Abgabeabschnitt (53) und gegebenenfalls einer formbestimmten Konterauflage (57), aus einem Glasbehältnis-Rohling (9), wobei:
- die Flächenmasse des Glasbehältnis-Rohlings (9) mittelbar oder unmittelbar erfasst wird; und
- anhand der erfassten Flächenmasse eine individuelle Gesamtlängserstreckung eines zur Bildung des Glasbehältnisses (4) umzuformenden Glasbehältnis-Halbzeugs (10) ermittelt wird.

2. Verfahren nach Anspruch 1, wobei das Glasbehältnis-Halbzeug (10) entsprechend der ermittelten Gesamtlängserstreckung von dem Glasbehältnis-Rohling (9) abgelängt wird.

3. Verfahren nach Anspruch 1 oder 2, wobei anhand der erfassten Flächenmasse des Glasbehältnis-Rohlings (9) eine individuelle Längserstreckung eines insbesondere vorlaufenden Endabschnitts, aus dem der Abgabeabschnitt (53) zu formen ist, und gegebenenfalls eines insbesondere nachlaufenden Endabschnitts, aus dem die Konterauflage (57) zu formen ist, ermittelt wird/werden, wobei insbesondere anhand der ermittelten Längserstreckung/en die Gesamtlängserstreckung des Glasbehältnis-Halbzeugs (10) ermittelt wird, und/oder wobei das abgetrennte Glasbehältnis-Halbzeug (10) zumindest abschnittsweise erwärmt wird, um den Abgabeabschnitt (53) und gegebenenfalls die Konterauflage (57) zu formen.

4. Verfahren nach einem der vorstehenden Ansprüche, wobei anhand einer glasspezifischen Materialkonstante ein Verformungsverhalten des Glasbehältnis-Halbzeugs (10) beim Erwärmen und/oder beim Formen des Abgabeabschnitts (53) und gegebenenfalls der Konterauflage (57) antizipiert wird und die Gesamtlängserstreckung unter Berücksichtigung des antizipierten Verformungsverhaltens ermittelt wird.

5. Verfahren, insbesondere nach einem der vorstehenden Ansprüche, zum Herstellen eines Glasbehältnisses (4), wie einer Glasspritze oder einer Glasampulle, mit einem formbestimmten Abgabeabschnitt (53) und gegebenenfalls einer formbestimmten Konterauflage (57), aus einem Glasbehältnis-Rohling (9), wobei:
- der Glasbehältnis-Rohling (9) zumindest abschnittsweise erwärmt wird, um den Abgabeabschnitt (53) und gegebenenfalls die Konterauflage (57) zu formen; und
- vor dem Formen des Abgabeabschnitts (53) und gegebenenfalls der Konterauflage (57) die Flächenmasse des Glasbehältnis-Rohlings (9) mittelbar oder unmittelbar erfasst wird;
- anhand der erfassten Flächenmasse des Glasbehältnis-Rohlings (9) eine individuelle Längserstreckung eines insbesondere vorlaufenden Endabschnitts, aus dem der Abgabeabschnitt (53) zu formen ist, und gegebenenfalls eines insbesondere nachlaufenden Endabschnitts, aus dem die Konterauflage (57) zu formen ist, ermittelt wird/werden; und
- anhand der ermittelten Längserstreckung/en eine axiale Deformationsstelle (61, 63) am Glasbehältnis-Rohling (9) bestimmt wird, um den Abgabeabschnitt (53) und gegebenenfalls die Konterauflage (57) zu bilden.

6. Verfahren nach Anspruch 5, wobei die axiale Deformationsstelle (61, 63) derart festgelegt wird, dass ein von der axialen Deformationsstelle (61, 63) begrenzter axialer Endabschnitt des Glasbehältnis-Rohlings (9) zum Bilden des Abgabeabschnitts (53) und gegebenenfalls der Konterauflage (57) eine vorbestimmte Masse besitzt, und/oder wobei entsprechend einer vorab festgelegten oder ermittelten Gesamtlängserstreckung ein zur Bildung des Glasbehältnisses (4) umzuformendes Glasbehältnis-Halbzeug (10) von dem Glasbehältnis-Rohling (9) abgelängt wird.

7. Verfahren nach einem der Ansprüche 5 bis 6, wobei eine Planheit einer axialen End-Stirnfläche des Glasbehältnis-Rohlings (9) oder des abgelängten Glasbehältnis-Halbzeugs (10) ermittelt, insbesondere gemessen, wird.

8. Verfahren nach einem der Ansprüche 5 bis 7, wobei der Glasbehältnis-Rohling (9) oder das abgelängte Glasbehältnis-Halbzeug (10) anhand der axialen Deformationsstelle (61, 63) und gegebenenfalls der Planheit der axialen End-Stirnfläche bezüglich eines Formwerkzeugs zum Bilden des Abgabeabschnitts (53) und gegebenenfalls der Konterauflage (57) positioniert wird, und/oder wobei anhand einer glasspezifischen Materialkonstante ein Verformungsverhalten des Glasbehältnis-Rohlings (9) oder Glasbehältnis-Halbzeugs (10) beim Erwärmen und/oder beim Formen des Abgabeabschnitts (53) und gegebenenfalls der Konterauflage (57) antizipiert wird und die Längserstreckung des zu formenden Abgabeabschnitts (53) und gegebenenfalls der zu formenden Konterauflage (57) anhand des antizipierten Verformungsverhaltens ermittelt wird.

9. Verfahren nach einem der vorstehenden Ansprüche, wobei ein Außendurchmesser, ein Innendurchmesser und/oder eine Wandstärke des Glasbehältnis-Rohlings (9) erfasst, insbesondere gemessen, wird/werden und die Flächenmasse des Glasbehältnis-Rohlings (9) anhand des gemessenen Außendurchmessers, des Innendurchmessers und/oder der Wandstärke ermittelt, insbesondere berechnet, wird.

10. Anlage (3) zum Herstellen eines Glasbehältnisses (4), wie einer Glasspritze oder einer Glasampulle, mit einem formbestimmten Abgabeabschnitt (53) und gegebenenfalls einer formbestimmten Konterauflage (57), aus einem Glasbehältnis-Rohling (9), umfassend:
- Sensorik (41) zum mittelbaren oder unmittelbaren Erfassen der Flächenmasse des Glasbehältnis-Rohlings (9); und
- eine Prozessoreinheit, die dazu ausgelegt ist, anhand der erfassten Flächenmasse eine individuelle Gesamtlängserstreckung eines zur Bildung des Glasbehältnisses (4) umzuformenden Glasbehältnis-Halbzeugs (10) zu ermitteln.

11. Anlage (3) nach Anspruch 10, ferner umfassend ein Ablängwerkzeug (35) zum Ablängen des Glasbehältnis-Halbzeugs (10) entsprechend der ermittelten Gesamtlängserstreckung von dem Glasbehältnis-Rohling (9), wobei insbesondere die Sensorik (41) dem Ablängwerkzeug (35) vorgelagert ist.

12. Anlage (3), insbesondere nach Anspruch 10 oder 11, zum Herstellen eines Glasbehältnisses (4), wie einer Glasspritze oder einer Glasampulle, mit einem formbestimmten Abgabeabschnitt (53) und gegebenenfalls einer formbestimmten Konterauflage (57), aus einem Glasbehältnis-Rohling (9), umfassend:
- eine Wärmequelle, wie einen Brenner (2), zum zumindest abschnittsweisen Erwärmen des Glasbehältnis-Rohlings (9);
- ein Formwerkzeug, das dazu ausgebildet ist, den erwärmten Glasbehältnis-Rohling (9) zur Bildung des Abgabeabschnitts (53) und gegebenenfalls der Konterauflage (57) zu deformieren;
- Sensorik (41) zum mittelbaren oder unmittelbaren Erfassen der Flächenmasse des Glasbehältnis-Rohlings (9), wobei die Sensorik (41) dem Formwerkzeug vorgelagert ist; und
- eine Prozessoreinheit, die dazu ausgelegt ist, eine individuelle Längserstreckung eines insbesondere vorlaufenden Endabschnitts, aus dem der Abgabeabschnitt (53) zu formen ist, und gegebenenfalls eines insbesondere nachlaufenden Endabschnitts, aus dem die Konterauflage (57) zu formen ist, zu ermitteln; und anhand der ermittelten Längserstreckung/en eine axiale Deformationsstelle (61, 63) am Glasbehältnis-Rohling (9) für das Formwerkzeug zu bestimmen, um den Abgabeabschnitt (53) und gegebenenfalls die Konterauflage (57) zu bilden.

13. Anlage (3) nach einem der Ansprüche 10 bis 12, wobei die Sensorik (41) zum Erfassen der Flächenmasse eine optische Sensoreinrichtung insbesondere zum Messen eines Außendurchmessers, eines Innendurchmessers und/oder einer Wandstärke des Glasbehältnis-Rohlings (9) umfasst und/oder zum Messen der Planheit einer axialen End-Stirnfläche des Glasbehältnis-Rohlings (9) oder des abgelängten Glasbehältnis-Halbzeugs (10) umfasst, und/oder wobei die Anlage (3) dazu eingerichtet ist, das Verfahren nach einem der Ansprüche 1 bis 9 auszuführen.

## Claims

1. Method for producing a glass container (4), such as a glass syringe or a glass ampule, having a form-specific dispensing portion (53) and optionally a form-specific counter support (57), from a glass container blank (9), wherein:
- the basis weight of the glass container blank (9) is detected indirectly or directly; and
- an individual overall longitudinal extent of a semi-finished glass container (10) to be formed to create the glass container (4) is determined on the basis of the detected basis weight.

2. Method according to claim 1, wherein the semi-finished glass container (10) is cut from the glass container blank (9) according to the determined overall longitudinal extent.

3. Method according to claim 1 or 2, wherein an individual longitudinal extent of an in particular leading end portion, from which the dispensing portion (53) is to be formed, and optionally of an in particular trailing end portion, from which the counter support (57) is to be formed, is/are determined on the basis of the detected basis weight of the glass container blank (9), wherein the overall longitudinal extent of the semi-finished glass container (10) is determined in particular on the basis of the determined longitudinal extent and/or wherein the separated semi-finished glass container (10) is heated at least in portions in order to form the dispensing portion (53) and optionally the counter support (57).

4. Method according to any one of the preceding claims, wherein a deformation behavior of the semi-finished glass container (10) during heating and/or forming of the dispensing portion (53) and optionally of the counter support (57) is anticipated on the basis of a glass-specific material constant and the overall longitudinal extent is determined taking the anticipated deformation behavior into account.

5. Method, in particular according to any one of the preceding claims, for producing a glass container (4), such as a glass syringe or a glass ampule, having a form-specific dispensing portion (53) and optionally a form-specific counter support (57), from a glass container blank (9), wherein:
- the glass container blank (9) is heated at least in portions in order to form the dispensing portion (53) and optionally the counter support (57); and
- the basis weight of the glass container blank (9) is detected indirectly or directly before forming the dispensing portion (53) and optionally the counter support (57);
- an individual longitudinal extent of an in particular leading end portion, from which the dispensing portion (53) is to be formed, and optionally of an in particular trailing end portion, from which the counter support (57) is to be formed, is/are determined on the basis of the detected basis weight of the glass container blank (9); and
- an axial deformation point (61, 63) on the glass container blank (9) is determined on the basis of the determined longitudinal extent(s), to create the dispensing portion (53) and optionally the counter support (57).

6. Method according to claim 5, wherein the axial deformation point (61, 63) is defined such that an axial end portion of the glass container blank (9) delimited by the axial deformation point (61, 63), for creating the dispensing portion (53) and optionally the counter support (53) has a predetermined mass and/or wherein a semi-finished glass container (10) to be formed to create the glass container (4) is cut from the glass container blank (9) according to a predefined or predetermined overall longitudinal extent.

7. Method according to any one of claims 5 to 6, wherein a flatness of an axial end face of the glass container blank (9) or of the cut semi-finished glass container (10) is determined, in particular measured.

8. Method according to any one of claims 5 to 7, wherein the glass container blank (9) or the cut semi-finished glass container (10) is positioned on the basis of the axial deformation point (61, 63) and optionally of the flatness of the axial end face with respect to a forming tool for creating the dispensing portion (53) and optionally the counter support (57) and/or wherein a deformation behavior of the glass container blank (9) or semi-finished glass container (10) during heating and/or forming of the dispensing portion (53) and optionally of the counter support (57) is anticipated on the basis of a glass-specific material constant and the longitudinal extent of the dispensing portion (53) to be formed and optionally of the counter support (57) to be formed is determined on the basis of the anticipated deformation behavior.

9. Method according to any one of the preceding claims, wherein an external diameter, an internal diameter and/or a wall thickness of the glass container blank (9) is/are detected, in particular measured, and the basis weight of the glass container blank (9) is determined, in particular calculated, on the basis of the measured external diameter, the internal diameter and/or the wall thickness.

10. System (3) for producing a glass container (4), such as a glass syringe or a glass ampule, having a form-specific dispensing portion (53) and optionally a form-specific counter support (57), from a glass container blank (9), comprising:
- a sensor system (41) for indirectly or directly detecting the basis weight of the glass container blank (9); and
- a processor unit designed to determine an individual overall longitudinal extent of a glass container (10) to be formed to create the glass container (4) on the basis of the detected basis weight.

11. System (3) according to claim 10, further comprising a cutting tool (35) for cutting the semi-finished glass container (10) according to the determined overall longitudinal extent of the glass container blank (9), wherein in particular the sensor system (41) is upstream of the cutting tool (35).

12. System (3), in particular according to claim 10 or 11, for producing a glass container (4), such as a glass syringe or a glass ampule, having a form-specific dispensing portion (53) and optionally a form-specific counter support (57), from a glass container blank (9), comprising:
- a heat source, such as a burner (2), for at least partially heating the glass container blank (9);
- a forming tool designed to deform the heated glass container blank (9) in order to create the dispensing portion (53) and optionally the counter support (57);
- sensor system (41) for indirectly or directly detecting the basis weight of the glass container blank (9), wherein the sensor system (41) is upstream of the forming tool; and
- a processor unit designed to determine an individual longitudinal extent of an in particular leading end portion, from which the dispensing portion (53) is to be formed, and optionally of an in particular trailing end portion, from which the counter support (57) is to be formed; and to determine an axial deformation point (61, 63) on the glass container blank (9) for the forming tool on the basis of the determined longitudinal extent(s), in order to form the dispensing portion (53) and optionally the counter support (57).

13. System (3) according to any one of claims 10 to 12, wherein the sensor system (41) for detecting the basis weight comprises an optical sensor device, in particular for measuring an external diameter, an internal diameter and/or a wall thickness of the glass container blank (9) and/or for measuring the flatness of an axial end face of the glass container blank (9) or of the cut semi-finished glass container product (10) and/or wherein the system (3) is configured to carry out the method according to any one of claims 1 to 9.

## Revendications

1. Procédé, destiné à fabriquer un contenant en verre (4), comme une seringue en verre ou une ampoule en verre, pourvu d'une partie distributrice (53) de forme définie et le cas échéant, d'un contre-appui (57) de forme définie, à partir d'une ébauche (9) de contenant en verre,
- la masse surfacique de l'ébauche (9) de contenant en verre étant détectée indirectement ou directement ; et
- à l'aide de la masse surfacique détectée, une extension longitudinale totale individuelle d'un produit semi-fini (10) de contenant en verre qui doit être façonné pour créer le contenant en verre (4) étant déterminée.

2. Procédé selon la revendication 1, le produit semi-fini (10) de contenant en verre étant coupé en longueur en fonction de l'extension longitudinale totale déterminée de l'ébauche (9) de contenant en verre.

3. Procédé selon la revendication 1 ou 2, à l'aide de la masse surfacique détectée de l'ébauche (9) de contenant en verre, une extension longitudinale individuelle notamment antérieure d'une partie d'extrémité à partir de laquelle la partie distributrice (53) doit être façonnée, et le cas échéant d'une partie d'extrémité notamment postérieure à partir de laquelle le contre-appui (57) doit être façonné étant déterminée / déterminées, notamment à l'aide de l'extension longitudinale/des extensions longitudinales déterminée(s), l'extension longitudinale totale du produit semi-fini (10) de contenant en verre étant déterminée, et / ou le produit semi-fini (10) de contenant en verre sectionné étant chauffé au moins par endroits, pour façonner la partie distributrice (53) et le cas échéant le contre-appui (57).

4. Procédé selon l'une quelconque des revendications précédentes, à l'aide d'une constante de matière spécifique au verre, un comportement en déformation du produit semi-fini (10) de contenant en verre lors de l'échauffement et / ou lors du façonnage de la partie distributrice (53) et le cas échéant du contre-appui (57) étant anticipé et l'extension longitudinale totale étant déterminée sous considération du comportement en déformation déterminé.

5. Procédé, notamment selon l'une quelconque des revendications précédentes, destiné à fabriquer un contenant en verre (4), comme une seringue en verre ou une ampoule en verre, pourvu d'une partie distributrice (53) de forme définie et le cas échéant, d'un contre-appui (57) de forme définie, à partir d'une ébauche (9) de contenant en verre,
- l'ébauche (9) de contenant en verre étant chauffée au moins par endroits, pour façonner la partie distributrice (53) et le cas échéant le contre-appui (57) ; et
- avant le façonnage de la partie distributrice (53) et le cas échéant du contre-appui (57), la masse surfacique de l'ébauche (9) de contenant en verre étant détectée indirectement ou directement ;
- à l'aide de la masse surfacique détectée de l'ébauche (9) de contenant en verre, une extension longitudinale individuelle d'une partie d'extrémité notamment antérieure, à partir de laquelle la partie distributrice (53) doit être façonnée, et le cas échéant d'une partie d'extrémité notamment postérieure, à partir de laquelle le contre-appui (57) doit être façonnée étant déterminée / déterminées ; et
- à l'aide de l'extension longitudinale déterminée / des extensions longitudinales déterminées, un point de déformation (61, 63) axiale sur l'ébauche (9) de contenant en verre étant défini, pour créer la partie distributrice (53) et le cas échéant le contre-appui (57).

6. Procédé selon la revendication 5, le point de déformation (61, 63) axiale étant fixé de telle sorte qu'une partie d'extrémité axiale de l'ébauche (9) de contenant en verre délimitée par le point de déformation (61, 63) axiale pour créer la partie distributrice (53) et le cas échéant le contre-appui (57) détienne une masse prédéfinie, et / ou en fonction d'une extension longitudinale totale préalablement fixée en conséquence ou déterminée, un produit semi-fini (10) de contenant en verre qui doit être façonné pour créer le contenant en verre (4) étant coupé en longueur à partir de l'ébauche (9) de contenant en verre.

7. Procédé selon l'une quelconque des revendications 5 à 6, une planéité d'une face frontale d'extrémité axiale de l'ébauche (9) de contenant en verre ou du produit semi-fini (10) de contenant en verre coupé en longueur étant déterminée, notamment mesurée.

8. Procédé selon l'une quelconque des revendications 5 à 7, l'ébauche (9) de contenant en verre ou le produit semi-fini (10) de contenant en verre coupé en longueur étant positionné (e) à l'aide du point de déformation (61, 63) axiale et le cas échéant de la planéité de face frontale d'extrémité axiale par rapport à un outil de façonnage, pour créer la partie distributrice (53) et le cas échéant le contre-appui (57) et / ou à l'aide d'une constante de matière spécifique au verre, un comportement en déformation de l'ébauche (9) de contenant en verre ou du produit semi-fini (10) de contenant en verre lors de l'échauffement et / ou lors du façonnage de la partie distributrice (53) et le cas échéant du contre-appui (57) étant anticipé et l'extension longitudinale de la partie distributrice (53) à façonner et le cas échéant du contre-appui (57) à façonner étant déterminée à l'aide du comportement en déformation anticipé.

9. Procédé selon l'une quelconque des revendications précédentes, un diamètre extérieur, un diamètre intérieur et / ou une épaisseur de paroi de l'ébauche (9) de contenant en verre étant détecté(e)s notamment mesuré(e)s, et la masse surfacique de l'ébauche (9) de contenant en verre étant déterminée, notamment calculée à l'aide du diamètre extérieur, du diamètre intérieur et / ou de l'épaisseur de paroi mesuré(e).

10. Installation (3), destinée à fabriquer un contenant en verre (4), comme une seringue en verre ou une ampoule en verre, pourvu d'une partie distributrice (53) de forme définie et le cas échéant, d'un contre-appui (57) de forme définie, à partir d'une ébauche (9) de contenant en verre, comprenant :
- un système de capteurs (41) pour la détection indirecte ou directe de la masse surfacique de l'ébauche (9) de contenant en verre ; et
- une unité de processeur, qui est conçue pour déterminer à l'aide de la masse surfacique détectée une extension longitudinale totale individuelle d'un produit semi-fini (10) de contenant en verre qui doit être façonné pour créer le contenant en verre (4).

11. Installation (3) selon la revendication 10, comprenant par ailleurs un outil de coupe en longueur (35), destiné à couper en longueur le produit semi-fini (10) de contenant en verre en fonction de l'extension longitudinale totale déterminée de l'ébauche (9) de contenant en verre, notamment le système de capteurs (41) étant placé en amont de l'outil de coupe en longueur (35).

12. Installation (3), notamment selon la revendication 10 ou 11, destinée à fabriquer un contenant en verre (4), comme une seringue en verre ou une ampoule en verre, pourvu d'une partie distributrice (53) de forme définie et le cas échéant, d'un contre-appui (57) de forme définie, à partir d'une ébauche (9) de contenant en verre, comprenant:
- une source de chaleur, comme un brûleur (2), pour chauffer au moins par endroits l'ébauche (9) de contenant en verre ;
- un outil de façonnage, qui est conçu pour déformer l'ébauche (9) de contenant en verre chauffée pour créer la partie distributrice (53) et le cas échéant le contre-appui (57) ;
- un système de capteurs (41) pour la détection indirecte ou directe de la masse surfacique de l'ébauche (9) de contenant en verre, le système de capteurs (41) étant placé en amont de l'outil de façonnage ; et
- une unité de processeur, qui est conçue pour déterminer une extension longitudinale individuelle d'une partie d'extrémité notamment antérieure, à partir de laquelle la partie distributrice (53) doit être façonnée, et le cas échéant d'une partie d'extrémité notamment postérieure, à partir de laquelle le contre-appui (57) doit être façonné ; et à l'aide de l'extension longitudinale / des extensions longitudinales déterminée(s), définir pour l'outil de façonnage un point de déformation (61, 63) axiale sur l'ébauche (9) de contenant en verre, pour créer la partie distributrice (53) et le cas échéant le contre-appui (57).

13. Installation (3) selon l'une quelconque des revendications 10 à 12, le système de capteurs (41) destiné à détecter la masse surfacique comprenant un dispositif de capteur optique, notamment pour mesurer un diamètre extérieur, un diamètre intérieur et / ou une épaisseur de paroi de l'ébauche (9) de contenant en verre et / ou pour mesurer la planéité d'une face frontale d'extrémité axiale de l'ébauche (9) de contenant en verre ou du produit semi-fini (10) de contenant en verre coupé en longueur, et / ou l'installation (3) étant configurée pour réaliser le procédé selon l'une quelconque des revendications 1 à 9.
